# EUROPEAN PATENT SPECIFICATION

(11) **EP 2 865 979 B1**
(45) Date of publication and mention of the grant of the patent: **14.11.2018**
(21) Application number: 14189942.7
(22) Date of filing: 22.10.2014
(51) Int. Cl.: F25J 3/08, B01D 53/00, C01B 17/16

(54) **Purification of carbon dioxide**
Reinigung von Kohlendioxid
Purification de dioxyde de carbone

(30) Priority: 25.10.2013 US 201314063067
(43) Date of publication of application: 29.04.2015
(73) Proprietor: AIR PRODUCTS AND CHEMICALS, INC., Allentown, PA 18195-1501 (US)
(72) Inventor: Higginbotham, Paul, Guildford, Surrey GU1 2SY (GB); Guvelioglu, Galip Hakan, Macungie, PA Pennsylvania 18062 (US); Palamara, John Eugene, Macungie, PA Pennsylvania 18062 (US); White, Vincent, Ashtead, Surrey KT21 1SE (GB)
(74) Representative: Beck Greener

(56) References cited:
- EP-A1- 0 503 910
- GB-A- 2 069 118
- US-A1- 2002 117 391

## Description

The present invention relates to processes and apparatus for the purification of carbon dioxide. In particular, the invention relates to processes and apparatus for the removal of at least one "heavy" impurity from crude carbon dioxide by mass transfer separation at sub-ambient temperatures and super-atmospheric pressures. The invention has particular application to the purification of crude carbon dioxide comprising significant amounts of at least one "light" impurity.

By "light" impurity, the Inventors are referring to an impurity that is more volatile than carbon dioxide. Examples of "light" impurities include nitrogen (N₂), oxygen (O₂), argon (Ar), hydrogen (H₂), helium (He); methane (CH₄); carbon monoxide (CO), neon (Ne), xenon (Xe), krypton (Kr), nitric oxide (NO) and nitrous oxide (N₂O).

By "heavy" impurity, the Inventors are referring to an impurity that is less volatile than carbon dioxide. Examples of "heavy" impurities include hydrogen sulfide (H₂S); methanol (MeOH); C₃-C₈ hydrocarbons such as propane; carbon disulfide (CS₂); carbon oxysulfide (COS); dimethyl sulfide (Me₂S) and other organic sulfur compounds; nitrogen dioxide (NO₂); sulfur dioxide (SO₂); sulfur trioxide (SO₃); and ammonia (NH₃).

C₂ hydrocarbons such as ethane, ethylene and acetylene form azeotropic mixtures with carbon dioxide so they can behave as "light" impurities or "heavy" impurities depending on concentration.

Carbon dioxide from naturally occurring carbon dioxide sources, such as natural carbon dioxide fields and natural gas deposits, is used for enhanced oil recovery (EOR) in some areas of the world. Some of these sources contain hydrogen sulfide, which is undesirable for pipeline transport since hydrogen sulfide is toxic and corrosive in the presence of water. In addition, it is not desirable to introduce hydrogen sulfide to the crude oil that is being extracted by the EOR process.

Processes for the removal of hydrogen sulfide from carbon dioxide are known. For example, US3417572A (Pryor, 1968) discloses a method of treating hydrogen-rich gas comprising carbon dioxide and hydrogen sulfide. The hydrogen sulfide and carbon dioxide are condensed and separated from the hydrogen-rich gas. The condensed gases are then fed to a distillation column for separation into an essentially hydrogen sulfide-free carbon dioxide overhead vapor and a bottoms liquid containing at least 10 vol. % hydrogen sulfide. The separated hydrogen-rich gas is scrubbed to remove any residual carbon dioxide and hydrogen sulfide which is then also fed to the distillation column. Overhead vapor is condensed using an external closed cycle of propane refrigerant and bottoms liquid is reboiled using process cooling water. The distillation column has 100 trays and operates at about 590 psia (∼41 bar) so that the overhead temperature is 42°F (∼6°C) and the bottom temperature is about 45°F (∼7°C).

US3643451A (Foucar, 1972) discloses a method of producing high purity, high pressure carbon dioxide from a concentrated low pressure mixture of acid gases. The gaseous mixture is compressed, cooled and condensed and fed to a distillation column where it is separated into a high purity (at least 99.95%) carbon dioxide overhead vapor and a bottoms liquid containing condensed sulfur-containing gases. The overhead vapor is condensed using an external closed cycle of ammonia refrigerant and refrigeration duty for cooling and condensing the feed is provided by vaporizing bottoms liquid, carbon dioxide overhead liquid and the external refrigerant. The distillation column system operates at about 300 to 350 psia (∼21 to 24 bar) so that the overhead temperature is -5 to -10°F (∼-21 to -24°C) and the bottoms temperature is 40 to 70 °F (∼5 to 21°C). A bottoms product of 97% hydrogen sulfide is produced in the example.

WO81/02291A (Schuftan, 1981) discloses a method for separating a gas mixture comprising carbon dioxide, at least one gas having a lower boiling point than carbon dioxide and at least one impurity (typically hydrogen sulfide) having a higher boiling point than carbon dioxide. The gas mixture is cooled and distilled in a first column to a product gas free of the impurity and a liquid fraction containing the impurity. Pure carbon dioxide is obtained in a second distillation column, which operates slightly above the triple point pressure (∼518 kPa) of carbon dioxide. Liquid product from the first column is flashed at an intermediate pressure to remove dissolved light impurities, then further reduced in pressure and evaporated before being fed to the second column as vapor. The carbon dioxide overhead vapor is practically free of impurities and the bottoms liquid fraction is rich in impurities, typically containing sulfur compounds (primarily hydrogen sulfide) at a purity of up to 50 vol. %. Reflux and re-boil are effected by a heat pump cycle which uses purified carbon dioxide as the working fluid. The working fluid is passed through a compressor, a heat exchanger and a re-boiler immersed in the bottoms liquid, where it is condensed before being fed back to the top of the column as reflux. A substantially pure carbon dioxide product is withdrawn from the circulating carbon dioxide immediately upstream of the compressor at a pressure of about 5 atm. and at near-ambient temperature.

The Inventors have also developed a process for the removal of "heavy" impurities such as hydrogen sulfide from crude carbon dioxide. The process is described in co-pending US Patent Application No. 13/456854 filed on 26 April 2012, published as US2013/0283851A (APCI Docket No. 07597 USA), the disclosure of which is incorporated herein by reference. In that process, "heavy" impurities are removed from crude carbon dioxide by sub-ambient temperature distillation of crude carbon dioxide in a distillation column system operating at superatmospheric pressure(s) to produce carbon dioxide-enriched overhead vapor and a bottoms liquid enriched with the "heavy" impurities. The Inventors discovered that, where such processes involve at least one heat pump cycle using as working fluid carbon dioxide-containing fluid from the distillation system, significant savings in power consumption are realized when the process uses more than one recycle pressure in the heat pump cycles(s).

In addition to the "heavy" impurities, crude carbon dioxide can also contain significant quantities of "light" impurities. The "light" impurities tend to concentrate in the carbon dioxide product. Thus, depending on the purity specification of the carbon dioxide product, it may be necessary to also remove these "light" impurities from the carbon dioxide. Most conventional processes remove the "light" impurities from the carbon dioxide product. However, US3417572A and WO81/02291A (discussed above) are examples of prior art references that disclose processes for removing the "light" impurities before the "heavy" impurities.

GB971362 (Ruhemann, 1964) discloses a process for the removal of both "light" and "heavy" impurities from natural sources of carbon dioxide. Crude carbon dioxide feedstock at 30°C and 110 atm is cooled and condensed moisture removed. The gas is then dried, and cooled by indirect heat exchange to form partially condensed feedstock which is expanded to 20 atm and then fed to the lower column of a double fractionating column where it is separated into "light" impurity-enriched overhead and liquid carbon dioxide containing the "heavy" impurities. The overhead is removed, expanded and removed from the process. The liquid carbon dioxide is expanded to 8 atm and fed to the upper column of the double column where it is separated to produce carbon dioxide overhead vapor and "heavy" impurities-enriched bottoms liquid. The carbon dioxide gas is condensed and removed as liquid product, and the bottoms liquid containing the "heavy" impurities is expanded and removed from the process with the "light" impurities.

In US2002/0117391 (Beam, 2002), crude carbon dioxide is fed to a first distillation column for rejection of the light impurities. The heavy ends (containing the carbon dioxide) is fed to a second distillation column where the heavy liquid components are rejected from essentially pure carbon dioxide vapour which is then "polished" in adsorption units using beds of activated carbon to produce high purity carbon dioxide.

It is an objective of the present invention to provide a process for purifying crude carbon dioxide comprising not only one or more "heavy" impurity but also a significant quantity of one or more "light" impurity.

It is an object of preferred embodiments of the present invention to provide a more efficient process for removal of said impurities when compared to conventional processes in which "light" impurities are removed from carbon dioxide either before or after the "heavy" impurities are removed.

It is also an object of preferred embodiments of the present invention to provide a process for the removal of said impurities from crude carbon dioxide that consumes less energy when compared to such conventional processes.

It is a further object of preferred embodiments of the present invention to improve the overall recovery of carbon dioxide, ideally while maintaining or even improving purity.

In addition, it is an object of preferred embodiments of the present invention to provide a simplified process by eliminating the need for external refrigerant systems.

According to a first aspect of the present invention, there is provided a process for purifying crude carbon dioxide fluid comprising at least one "light" impurity and at least one "heavy" impurity, said process comprising:
cooling said crude carbon dioxide fluid above the triple point pressure of carbon dioxide by indirect heat exchange to produce cooled crude carbon dioxide fluid;
feeding said cooled crude carbon dioxide fluid to a first column system for mass transfer separation to produce carbon dioxide-enriched overhead vapor comprising said "light" impurity, and "heavy" impurity-enriched bottoms liquid depleted in said "light" impurity;
re-boiling said first column system by at least partially vaporizing at least one "heavy" impurity-enriched liquid in or taken from said first column system by indirect heat exchange to provide vapor for said first column system;
cooling and at least partially condensing carbon dioxide-enriched overhead vapor, or a compressed carbon dioxide-enriched gas produced therefrom, by indirect heat exchange to produce at least partially condensed carbon dioxide-enriched gas comprising said "light" impurity;
separating said at least partially condensed carbon dioxide-enriched gas by mass transfer separation in a second distillation column system to produce "light" impurity-enriched gas, and carbon dioxide-enriched liquid; and
providing at least a portion of said carbon dioxide-enriched liquid as reflux for said first column system,
wherein said first column system operates above the triple point pressure and below the critical pressure of carbon dioxide; and
wherein said process comprises at least one heat pump cycle using as working fluid a fluid from said first column system.

Suitable "heavy" impurity-enriched liquids in or taken from the second column system include "heavy" impurity-enriched bottoms liquid; and "heavy" impurity-enriched liquid(s) in or taken from at least one intermediate location in the second column system *(i.e.* "intermediate liquid").

By "carbon dioxide-enriched liquid", the Inventors are referring to the liquid left following removal of "light" impurities from the at least partially condensed carbon dioxide-enriched gas, and the residual liquid produced after flashing the liquid.

According to a second aspect of the present invention, there is provided apparatus for purifying crude carbon dioxide fluid comprising at least one "light" impurity and at least one "heavy" impurity, said apparatus comprising:
a first heat exchanger for cooling said crude carbon dioxide fluid by indirect heat exchange to produce cooled crude carbon dioxide fluid;
a first column system in fluid flow communication with said first heat exchanger for separating said cooled crude carbon dioxide fluid by mass transfer separation to produce carbon dioxide-enriched overhead vapor comprising said "light" impurity, and "heavy" impurity-enriched bottoms liquid depleted in said "light" impurity;
a second heat exchanger for re-boiling by indirect heat exchange a "heavy" impurity-enriched liquid in or taken from said first column system to provide vapor for said first column system;
a third heat exchanger for cooling and at least partially condensing carbon dioxide-enriched overhead vapor, or a compressed carbon dioxide-enriched gas produced therefrom, by indirect heat exchange to produce at least partially condensed carbon dioxide-enriched gas comprising said "light" impurity;
a separation unit in fluid flow communication with said third heat exchanger for separating at least partially condensed carbon dioxide-enriched gas to produce "light" impurity-enriched gas and carbon dioxide-enriched liquid; and
a conduit arrangement for providing at least a portion of said carbon dioxide-enriched liquid as reflux for said first column system,
wherein said apparatus comprises at least one heat pump cycle using as working fluid a fluid from said first column system; and
wherein said separation unit is a second distillation column system for mass transfer separation.

The first column system is for removal of the "heavy" impurities from the cooled crude carbon dioxide fluid and thus may be referred to as a "heavies" removal column system.

The second distillation column system is for removal (or "rejection") of the "light" impurities from the working fluid of the heat pump cycle and thus may be referred to as a "lights" removal (or rejection) column system. The second distillation column system usually comprises one or more distillation column systems for removing (or rejecting) one or more "light" impurity. Where the working fluid comprises two or more "light" impurities having different volatilities relative to each other, the second distillation column system may comprise a first distillation column for removing (or rejecting) at least a first "light" impurity, *e*.*g*. helium, and a second distillation column for removing (or rejecting) at least a second "light" impurity, *e*.*g*. nitrogen.

One advantage of preferred embodiments of the present invention is that overall energy consumption is reduced significantly. The reduction is achieved because the purity of the working fluid in the heat pump cycle is increased thereby enabling the recycle stream to condense over a narrower range of temperature which allows a closer average temperature approach when re-boiling the first column system. The recycle pressure can be reduced which enables a reduction in compression power required in the heat pump cycle.

A further advantage of preferred embodiments is that the overall recovery of carbon dioxide is improved significantly. The improvement is achieved as it is no longer necessary to purge working fluid from the heat pump cycle to prevent build up of "light" impurities. In addition, carbon dioxide is recovered from the overhead from the second distillation column system.

In addition, since external refrigeration is not required, preferred embodiments are simpler and more efficient.

All references herein to pressure are references to absolute pressure and not gauge pressure unless expressly stated otherwise. In addition, references to "light impurity" and "heavy impurity" should be interpreted as references to "light impurities" and "heavy impurities" as appropriate depending on the number of such impurities present in the crude carbon dioxide fluid. Further, unless expressly stated otherwise, fluid compositions are calculated in mol. % on a "dry" basis, *i.e.* excluding any water content from the calculations. In reality, to avoid operating problems, water content must be low enough to avoid freeze-out and/or hydrate formation, *i.e.* the crude carbon dioxide should have a water content of no more than 10 ppm.

### Overview of the process

The present invention involves a process for purifying crude carbon dioxide fluid comprising at least one "light" impurity and at least one "heavy" impurity.

The process involves cooling said crude carbon dioxide fluid above the triple point pressure of carbon dioxide by indirect heat exchange to produce cooled crude carbon dioxide fluid; feeding said cooled crude carbon dioxide fluid to a first column system for mass transfer separation to produce carbon dioxide-enriched overhead vapor comprising said "light" impurity, and "heavy" impurity-enriched bottoms liquid depleted in said "light" impurity; re-boiling said first column system by at least partially vaporizing at least one "heavy" impurity-enriched liquid in or taken from said first column system by indirect heat exchange to provide vapor for said first column system; cooling and at least partially condensing carbon dioxide-enriched overhead vapor, or a compressed carbon dioxide-enriched gas produced therefrom, by indirect heat exchange to produce at least partially condensed carbon dioxide-enriched gas comprising said "light" impurity; separating said at least partially condensed carbon dioxide-enriched gas by mass transfer separation in a second distillation column system to produce "light" impurity-enriched gas, and carbon dioxide-enriched liquid; and providing at least a portion of said carbon dioxide-enriched liquid as reflux for said first column system.

The first column system (and, indeed, the unit for separating the at least partially condensed carbon dioxide-enriched gas) operates above the triple point pressure of carbon dioxide, *i.e.* above about 5.2 bar, and below the critical pressure of carbon dioxide, *i.e.* below about 73.9 bar.

The process also comprises at least one heat pump cycle using as working fluid a fluid from said first column system. The working fluid is typically either carbon dioxide-enriched overhead vapor from the first column system, or a "heavy" impurity-enriched liquid such as an intermediate liquid or even bottoms liquid from the first column system.

In preferred embodiments, the first column system is reboiled in part by vaporizing a "heavy" impurity-enriched intermediate liquid by indirect heat exchange against the condensing recycle fluid from the heat pump cycle. "Heavy" impurity-enriched bottoms liquid is also vaporized by indirect heat exchange, possibly against another "warm" process stream, to provide further vapor for the first column system.

The "light" impurity-enriched gas typically comprises a significant amount (e.g. from about 15 mol % to about 80 mol %, or from about 20 mol % to about 50 mol %) of carbon dioxide. At least a portion of this carbon dioxide is preferably recovered from the gas to produce "light" impurity-rich residual gas and recovered carbon dioxide. Depending on the recovery process and hence the temperature and pressure conditions of the recovered carbon dioxide, the recovered carbon dioxide may be recycled to an appropriate point in the process, typically in the heat pump cycle.

By "mass transfer separation", the Inventors mean processes involving distillation (or rectification or fractionation), scrubbing, stripping or washing. The expression is intended to include processes in which heat is also transferred. Typically, mass transfer separation in the first column system is by distillation.

The skilled person would appreciate that, under normal operating conditions, the process is balanced and products of the mass transfer separations involved in the present invention are removed from the column systems effecting the separations to prevent unwanted buildup. The skilled person would appreciate that, under such conditions, the column systems typically contain an inventory of liquid.

By "re-boiling", the Inventors mean that liquid present in a column system is at least partially vaporized, typically by indirect heat exchange against a warmer process stream, to produce vapor for the column system and facilitate the mass transfer separation. Bottoms liquid and/or liquid from an intermediate point in the column system may be reboiled. The liquid may be re-boiled within the column using an *in situ* re-boiler, or may be re-boiled outside the column, for example using a side re-boiler which may be a discrete unit, or may be a zone in a larger heat exchange unit.

### Crude carbon dioxide fluid

The crude carbon dioxide fluid may be taken from any suitable source. In some embodiments, the crude carbon dioxide fluid is derived from a natural source of carbon dioxide. In other embodiments, the crude carbon dioxide fluid may originate from enhanced oil recovery (EOR) processes.

In general, crude carbon dioxide from the field will often be reduced in pressure or temperature to "knock out" water, dissolved sulfur compounds and heavier hydrocarbons. For example, in EOR applications in particular, crude carbon dioxide would typically be reduced to low pressure, e.g. less than 5 bar. In such case, the crude carbon dioxide would be recompressed prior to processing using the present invention.

In addition, the concentration of water in the crude carbon dioxide may be further reduced to reduce the potential for condensation or hydrate formation within the present invention. The dehydration step could be performed with an adsorption system or a solvent-based system, for example using a glycol mixture as a solvent.

The pressure of the crude carbon dioxide fluid is typically above the triple point pressure for carbon dioxide (*i.e.* about 5.2 bar) and usually no more than 200 bar. Since the critical pressure of carbon dioxide is about 73.9 bar, the crude carbon dioxide fluid may be below, at or above the critical pressure for carbon dioxide. In some embodiments, the pressure of the crude carbon dioxide fluid is from about 100 bar to about 200 bar. In other embodiments, the pressure of the crude carbon dioxide fluid is from about 20 bar to about 100 bar, e.g. from about 30 bar to about 80 bar.

The temperature of the crude carbon dioxide fluid is typically no less than -20°C, usually no less than -10°C, and preferably no less than 0°C. The temperature may be above the critical temperature for carbon dioxide, *i.e.* about 31.1°C. However, the temperature of the crude carbon dioxide fluid is typically no more than 100°C, usually no more than 50°C and preferably no more than 30°C. In some embodiments, the temperature is no more than 20°C, or even no more than 15°C. The temperature may be about the "bubble point" of carbon dioxide, *i.e.* the temperature at which the carbon dioxide begins to boil at a given pressure. In other embodiments, the temperature is at or above the dew point of carbon dioxide.

The present invention is intended to process crude carbon dioxide fluid at flow rates typically from about 50 to about 100,000 kmol/h (or 1 to 2000 million standard cubic feet per day or MMSCFD), *e*.*g*. about 500 to about 50,000 kmol/h (or 10 to 1000 MMSCFD). Individual plants would process typically about 2,500 to about 10,000 kmol/h (or 50 to 200 MMSCFD) but multiple plants may be used in parallel.

The crude carbon dioxide fluid typically comprises at least 50 mol. %, *e*.*g*. at least 65 mol. % and preferably at least 80 mol. % carbon dioxide. The crude carbon dioxide fluid typically comprises no more than 97 mol. %, *e*.*g*. no more than 95 mol. %, carbon dioxide. In preferred embodiments, the crude carbon dioxide comprises from about 85 mol. % to about 95 mol. % carbon dioxide.

Typical "heavy" impurities include hydrogen sulfide; methanol; C₃ to C₈ hydrocarbons such as propane; carbon disulfide; carbon oxysulfide; dimethyl sulfide and other organic sulfur compounds; nitrogen dioxide; sulfur dioxide; sulfur trioxide; and ammonia, and the present invention may be applied to the removal of any one, or any mixture, of these impurities or other "heavy" impurities. The total concentration of the "heavy" impurities in the crude carbon dioxide fluid is typically no more than 50 mol. %, for example no more than 25 mol %, *e*.*g*. no more than 10 mol. %. The total concentration of the "heavy" impurities in the crude carbon dioxide fluid is typically at least 0.1 mol. %, for example at least 0.2 mol. %, *e*.*g*. at least 0.5 mol. % or 1 mol. %.

The invention has particular application in the removal of hydrogen sulfide as a "heavy" impurity. The concentration of hydrogen sulfide may be from about 0.1 mol. % to about 25 mol. %, *e*.*g*. from about 0.2 mol. % to about 10 mol. %.

Typical "light" impurities include nitrogen; oxygen; neon; krypton; argon; xenon; hydrogen; helium; methane; C₂ hydrocarbons such as ethane; carbon monoxide; nitric oxide; and nitrous oxide, and the present invention may be applied to the removal of any one or any mixture of these impurities or other "light" impurities. The total concentration of the "light" impurities in the crude carbon dioxide fluid is typically no more than 50 mol. %, for example no more than 25 mol %, *e*.*g*. no more than 10 mol. %. The total concentration of the "light" impurities in the crude carbon dioxide fluid is typically at least 0.1 mol. %, for example at least 0.2 mol. %, *e*.*g*. at least 0.5 mol. % or 1 mol. %.

As indicated above, the present invention has particular application in the removal of hydrogen sulfide as a "heavy" impurity. In such cases, the "light" impurities are typically one or more of nitrogen, argon, helium, methane and ethane. The total concentration of "light" impurities in such cases may be from about 0.5 mol. % to about 50 mol. %, *e*.*g*. from about 1 mol. % to about 25 mol. %.

In embodiments where the crude carbon dioxide fluid is gaseous and at a sub-critical pressure, the fluid is typically condensed on cooling. In embodiments where the crude carbon dioxide fluid is supercritical, the fluid is "pseudo-condensed" on cooling. Typically, the crude carbon dioxide fluid is cooled to a temperature in the range from about 0°C to about -55°C.

The cooled crude carbon dioxide fluid is usually expanded prior to being fed to the first column system. Prior to expansion, the cooled crude carbon dioxide fluid may be below, at or above the critical pressure for carbon dioxide. However, after expansion, the pressure of the fluid is sub-critical.

Expanded crude carbon dioxide liquid is typically vaporized by indirect heat exchange prior to being fed to the first column system.

### Removal of "heavy" impurities

Crude carbon dioxide fluid is fed to the first column system for mass transfer separation to produce carbon dioxide-enriched overhead vapor and bottoms liquid enriched with the "heavy" impurity.

The operating pressure(s) of the first column system is typically at least 10 bar. This avoids having to operate the column system at a temperature that is excessively cold and means that the volumetric suction flow of the heat pump compressor is not excessive.

The operating pressure(s) of the first column system is typically no more than about 40 bar, *e*.*g*. no more than about 30 bar. In preferred embodiments, the operating pressure(s) is no more than about 25 bar. At this pressure, the first column system operates sufficiently far from the critical pressure for the hydraulic parameters within the column to be comfortable.

The temperature of the primary feed to the first column system is typically in the range from about -40°C to about 5°C.

The first column system may comprise a single distillation column, a split distillation column where both parts of the column operate at the same pressure, or multiple distillation columns where the columns operate at different pressures. In the latter case, all of the operating pressures fall within the preferred ranges given above.

In embodiments in which the first column system comprises two distillation columns operating at different pressures, the operating pressure of the higher pressure column is typically from about 15 bar to about 40 bar and the operating pressure of the lower pressure column is typically from about 10 bar to about 30 bar.

The crude carbon dioxide fluid is preferably fed to an intermediate location in the first column system. The first column system typically contains distillation trays and/or packing (random and/or structured), together with liquid re-distributors etc., to increase vapor/liquid contact and thereby improve mass transfer separation. In such embodiments, the first column system typically comprises at least two distillation sections with an intermediate zone between adjacent distillation sections. This intermediate zone is typically the feed location for the crude carbon dioxide fluid.

By "adjacent distillation sections", the Inventors mean that there is no other distillation section between them. The "adjacent" distillation sections may be within the same distillation column system, *e*.*g*. in a single distillation column system, or may be in different distillation column systems, *e*.*g*. in a split or multiple distillation column system. The adjacent distillation sections may be in vertically and/or laterally spaced apart relation. Where the adjacent distillation sections are in laterally spaced apart relation, it may be necessary to pump liquid from one distillation section to the other, depending on the position of the distillation sections relative to each other.

The first column system is typically re-boiled by at least partially vaporizing liquid in or taken from an intermediate location in the first column system. The intermediate liquid may be in or taken from the same intermediate zone as the feed location, or may be in or taken from a different intermediate zone in the first column system below said feed location, *i.e.* with at least one distillation section therebetween.

Vaporization duty for said intermediate liquid(s) may be provided by condensing carbon dioxide-enriched overhead vapor or by at least one condensing recycle stream from the heat pump cycle(s).

In addition, the first column system is typically re-boiled by at least partially vaporizing bottoms liquid produced in the first column system. The reboiler may be in the sump of the column system, or may be located outside the column.

Vaporization duty for said bottoms liquid is typically provided by condensing crude carbon dioxide gas and/or cooling crude carbon dioxide fluid.

The first column system may also comprise at least one vapor/liquid separator; one separator to separate a flash vapor component from reflux liquid for the column system; and/or a different separator to separate a liquid component from vapor for the column system generated from partially re-boiled liquid taken from the column system.

Carbon dioxide-enriched overhead vapor has a greater concentration of carbon dioxide than the crude carbon dioxide fluid. The concentration of carbon dioxide in the overhead vapor is typically at least 70 mol. %, e.g. at least 80 mol. % and preferably at least 90 mol. %. The overhead vapor is preferably contains no more than 200 ppm, preferably no more than 100 ppm, of "heavy" impurities.

The bottoms liquid produced in the first column system comprises at least substantially all, and preferably essentially all, of any "heavy" impurity present in the crude carbon dioxide fluid. In preferred embodiments, the vapor flow in the bottom section of the distillation column system is reduced resulting in a reduction in the diameter of the bottom section of the column system. The total inventory of bottoms liquid is thereby reduced significantly where there is a higher concentration of the less volatile impurities. A reduction in the amount of liquid inventory means that there is less liquid inventory to escape in the event of a catastrophic failure of the plant. This advantage is particularly important where the "heavy" impurity or, where there is more than one, at least one of the "heavy" impurities is toxic, for example, in cases where the impurity is hydrogen sulfide.

The process also provides carbon dioxide-enriched liquid for use as reflux for the first column system, and a portion of the bottoms liquid is typically at least partially re-boiled by indirect heat exchange to provide vapor for the column system. Carbon dioxide-enriched overhead vapor is removed from the column system, as is a portion of the bottoms liquid, or a liquid derived from bottoms liquid.

### Heat pump cycle(s)

Re-boiling duty for at least the first column system is provided at least in part by indirect heat exchange against recycle fluid(s) from at least one heat pump cycle using a fluid from the first column system as working fluid. Where there is more than one recycle fluid, at least one of the recycle fluids may be at a different pressure from the other recycle fluid(s).

By "heat pump cycle", the Inventors are referring to a cycle by which thermal energy is transferred from a heat source, which is at lower temperature, to a heat sink, which is at higher temperature. The heat pump cycle uses a working fluid which in this case is a carbon dioxide vapor from the second column system.

Typically, the working fluid is removed from the first column system; at least partially vaporized (optional); warmed; compressed; and recycled to the column system after suitable cooling (and optional at least partial condensation) and pressure reduction. The compressed fluid, or "recycle fluid", is used to provide re-boil duty by indirect heat exchange, e.g. with "heavy" impurity-enriched liquid(s) in or taken from the second distillation column system, and typically "heavy" impurity-enriched intermediate liquid(s). The recycle fluid(s) are cooled to a certain extent as a result of providing the re-boil duty but typically require further cooling before being returned to the first column system.

In preferred embodiments, the heat source is the overhead vapor that typically condenses at a lower temperature than the re-boiler (the heat sink). However, the Inventors have observed that, by compressing the overhead vapor in the heat pump cycle, the vapor transfers heat to the re-boiler and is condensed at a higher temperature than the reboiler.

In some embodiments, the working fluid is carbon dioxide depleted in "heavy" impurity and typically selected from the group consisting of carbon dioxide-enriched overhead vapor or carbon dioxide-enriched vapor taken from an intermediate location in the second column system ("intermediate vapor"). In preferred embodiments, overhead vapor is used as the working fluid.

The present invention may involve at least two recycle fluids at different pressures. In such cases, the pressure differential is significant, typically of the order of at least 10%, e.g. at least 25% or even at least 50%, although the pressure differential is usually no more than 200%, *e*.*g*. no more than 100%. In absolute terms, the pressure differential may be at least 2 bar, *e*.*g*. at least 5 bar and preferably at least 10 bar. The pressure differential is usually no more than 50 bar and preferably no more than 30 bar.

In some preferred embodiments, the process comprises a single heat pump cycle having one or more recycle fluids. Where there is one recycle fluid, the pressure of that fluid is typically from about 15 bar to about 60 bar.

Where there is more than one recycle fluid, the process may comprise a first recycle fluid and a second recycle fluid, the second recycle fluid having a pressure that is greater than that of the first recycle fluid. The pressure of the first recycle fluid is typically from about 15 bar to about 30 bar. The pressure of the second recycle fluid is typically about 20 bar to about 70 bar.

In some embodiments, the working fluid of the heat pump cycle comprises carbon dioxide-enriched gas generated by warming the carbon dioxide-enriched overhead vapor by indirect heat exchange. At least a portion of the duty required to warm the carbon dioxide-enriched overhead vapor may be provided by indirect heat exchange against any suitable "warm" process stream but is preferably provided by indirect heat exchange against at least one of the recycle fluids. The compressor feed may be warmed against the compressor products so that the flows on both sides of the heat exchanger are the same. In these embodiments, both the first and second recycle fluids are used to warm the overhead vapor.

The recycle fluid(s) are typically recycled to an appropriate location in the first column system after suitable pressure reduction. The appropriate location in the first column system is typically where the composition in the column matches the composition of the recycle fluids. Where the working fluid is carbon dioxide overhead vapor, condensed recycle fluid is typically recycled as reflux to the first column system.

The ratio of molar flow of the first recycle fluid to the second recycle fluid is determined by the duty required of the fluids. Typically, the molar flow ratio is from about 0.1 (*i.e.* 1:10) to about 15 (*i.e.* 15:1). In some preferred embodiments, this ratio is from about 3 (*i.e.* 3:1) to about 12 (*i.e.* 12:1). In other preferred embodiments, the ratio is from about 0.2 (*i.e.* 1:5) to about 1 (*i.e.* 1:1).

In other embodiments, the working fluid of the heat pump cycle comprises "heavy" impurity-enriched gas generated by vaporizing liquid taken from said first column system by indirect heat exchange after suitable pressure reduction. The liquid is an "heavy" impurity-enriched liquid taken from an intermediate location in the first column system or the bottom of said column system. In preferred embodiments, the intermediate liquid is removed from a location that is at least substantially level (or below) with the location of the main feed to the first column system. In such embodiments, the composition of the intermediate liquid is usually at least substantially identical to that of the carbon dioxide feed to the first column system. In these embodiments, the working fluid may also comprise carbon dioxide gas generated by warming the carbon dioxide overhead vapor by indirect heat exchange.

At least a portion of the duty required to evaporate said "intermediate" liquid may also be provided by any suitable "warm" process stream. Preferably, the intermediate liquid is evaporated by indirect heat exchange against condensing overhead vapor from the first column system.

In these other embodiments, the first recycle fluid is preferably recycled as part of the feed to the first column system and, additionally or alternatively, the second recycle fluid is preferably recycled as part of the working fluid for the heat pump cycle after suitable pressure reduction.

The process may comprise at least a first heat pump cycle and a second heat pump cycle, each heat pump cycle comprising at least one recycle fluid. In these embodiments, the recycle fluid of the first heat pump cycle or, where the first heat pump cycle has more than one recycle fluid, at least one of the recycle fluids, has a pressure that is greater than that of a recycle fluid of the second heat pump cycle.

The working fluid of the first heat pump cycle preferably comprises carbon dioxide-enriched gas generated by warming the carbon dioxide-enriched overhead vapor by indirect heat exchange. At least a portion of the duty required to warm the carbon dioxide-enriched overhead vapor may be provided by indirect heat exchange against any suitable "warm" process stream although, in preferred embodiments, it is provided by indirect heat exchange against at least one of the recycle fluids. The pressure of the recycle fluid of the first heat pump cycle is typically from about 15 bar to about 60 bar.

The working fluid of the second heat pump cycle may comprises carbon dioxide-enriched gas generated by warming "intermediate" vapor taken from an intermediate location of the distillation column system by indirect heat exchange. The "intermediate" vapor is a carbon dioxide-enriched fluid. In preferred embodiments, the intermediate vapor is removed from a location that is at least substantially level with the location of the main feed to the column system. In such embodiments, the composition of the intermediate vapor is usually at least substantially identical to that of the carbon dioxide feed.

At least a portion of the duty required to warm the "intermediate" vapor may be provided by indirect heat exchange against any suitable "warm" process stream although, in preferred embodiments, it is provided by indirect heat exchange against at least one of the recycle fluids.

As in the other embodiments, the recycle streams are usually recycled to appropriate locations in the first column system after suitable pressure reduction if required. In this connection, the first recycle fluid is preferably condensed and recycled after pressure reduction to the top of the first (or, if present, second) column system to provide reflux. The second recycle fluid is usually recycled after suitable pressure reduction if required to an intermediate location in the first column system that is at least substantially level with the location of the main feed to the column system. In preferred embodiments in which the column system comprises a dual column arrangement, the working fluid for the second heat pump cycle is intermediate vapor from the lower pressure column and is recycled without pressure reduction to the bottom of the higher pressure column.

The pressure of the recycle fluid of the second heat pump cycle is preferably from about 10 bar to about 25 bar, e.g. the operating pressure of the part of the first column system to which the recycle fluid is recycled.

### Re-boiling duty for the first column system

Bottoms liquid alone, or both bottoms liquid and at least one liquid from an intermediate location in the first column system (or "intermediate liquid") is preferably at least partially re-boiled by indirect heat exchange to provide vapor for the first column system. At least a portion of the re-boiling duty, particularly for intermediate liquid(s), may be provided by indirect heat exchange against any suitable "warm" process stream although, in preferred embodiments, it is provided by indirect heat exchange against at least one of the recycle fluids, e.g. the first recycle fluid which is at least partially condensed as a result.

In embodiments in which the heat pump has a single recycle stream, an advantage of using the intermediate reboiler is that the pressure to which the working fluid must be compressed is reduced thereby saving power. In embodiments in which the heat pump has more than one recycle stream, or where there is more than one heat pump cycle, an advantage of using an intermediate re-boiler is that the power consumption is significantly reduced by only needing to compress a fraction (typically <10%) of the overhead vapor to the higher pressure required to heat the bottom re-boiler, whilst the rest only needs to be compressed to the lower pressure.

A further advantage of the intermediate re-boiler for all embodiments is that the column diameter below the reboiler, where the hydrogen sulfide concentration increases rapidly, can be significantly reduced so that the inventory of highly toxic hydrogen sulfide can be reduced.

In some preferred embodiments, the reflux for the first column system is preferably provided by at least one recycle fluid condensate, typically condensed overhead vapor, after suitable pressure reduction. In other embodiments, the reflux for the column is provided by an overhead condenser arrangement in which overhead vapor is at least partially condensed by indirect heat exchange against at least one "cold" process stream, e.g. re-boiling intermediate or bottoms liquid, and returned to the column system.

### Removal of "light" impurities

The "light" impurities are removed from at least partially condensed carbon dioxide-enriched gas by mass transfer separation in a second distillation column system.

The operating pressure(s) of the second distillation column system used for separating the at least partially condensed carbon dioxide gas is typically from about 5.2 bar to about 60 bar, e.g. from about 15 bar to about 60 bar, and operating temperature(s) is typically from about -55°C to about 25°C.

The or each "light" impurity may be removed in a single step. The second distillation column system typically comprises a single distillation column system to which the at least partially condensed carbon dioxide-enriched gas is fed for mass transfer separation to produce the "light" impurity-enriched overhead vapor and the carbon dioxide-enriched liquid depleted in "light" impurities.

In some cases where there is more than one "light" impurity, one of the light impurities may be more valuable than the other(s). In which case, it may be desirable to recover the more valuable "light" impurity separately from the other "light" impurities. Examples of such cases would include situations where the "light" impurities include hydrogen or helium which are more volatile (and potentially more valuable) than other "light" impurities such as nitrogen, oxygen, argon and methane.

In cases where the at least partially condensed carbon dioxide-enriched gas comprises a first "light" impurity and a second "light" impurity, the first "light" impurity being more volatile than said second "light" impurity, then the process may comprise different steps for removing the "light" impurities. Thus, the second distillation column system may comprise a plurality of distillation column systems, for example a first distillation column and a second distillation column. In such cases, the process may comprise feeding the at least partially condensed crude carbon dioxide-enriched fluid to the first distillation column to produce overhead vapor enriched in the first "light" impurity, and bottoms liquid depleted in the first "light" impurity; re-boiling the first distillation column by indirect heat exchange to provide vapor for the first distillation column; feeding bottoms liquid from the first distillation column to the second distillation system to produce the "light" impurity-enriched overhead vapor and the "light" impurity depleted carbon dioxide bottoms liquid; and feeding bottoms liquid from the second distillation column to the first distillation column, preferably as reflux.

The bottoms liquid from the first distillation column would be typically expanded prior to being fed to the second distillation column.

The bottoms liquid from the second distillation column would preferably be pumped prior to being fed to the first distillation column.

Additionally or alternatively, reflux for the first distillation column may be provided using recovered carbon dioxide liquid.

The first and second distillation columns both operate within the broad range of pressures and temperatures identified above. However, in preferred embodiments, the first distillation column operates at a pressure of about 20 bar to about 60 bar and a feed temperature from about -55°C to about 10°C, and the second distillation system operates at a pressure of about 10 bar to about 50 bar and a feed temperature from about -30°C to about 10°C.

In other embodiments where the crude carbon dioxide fluid comprises methane as a "light" impurity, the second distillation column system recovers methane in a methane-enriched overhead vapor. If nitrogen is also present as a "light" impurity, then the methane-enriched overhead vapor also contains nitrogen and the overhead vapor may then be subjected to a nitrogen rejection process to recover the methane.

In further embodiments where the "light" impurities are methane, nitrogen and helium, it would be possible to reject a mixture of the light impurities, then apply conventional processes for the rejection of nitrogen and recovery of helium.

Re-boiling duty for a second distillation column system is usually provided at least in part by indirect heat exchange against condensing crude carbon dioxide fluid. However, the re-boiling duty may be provided at least in part by indirect heat exchange against condensing recycle fluid in the heat pump cycle.

### Recovery of carbon dioxide

As mentioned above, the "light" impurity-enriched gas comprises a significant amount of carbon dioxide. The Inventors propose recovering carbon dioxide from this gas to improve overall carbon dioxide recovery.

The temperature of the "light" impurity-enriched gas when fed to the carbon dioxide recovery step depends on the nature of the recovery process. The temperature of the "light" impurity-enriched gas may be reduced or increased or even remain unchanged after the "light" impurity-enriched gas is produced. In preferred embodiments, the "light" impurity-enriched gas is cooled to condense carbon dioxide to facilitate separation from the "light" impurities which would remain uncondensed. This is referred to herein as "cold" recovery of carbon dioxide.

The refrigeration duty required to cool and partially condense the "light" impurity-enriched gas may be provided by indirect heat exchange against any suitable "cold" process stream, for example by evaporating recovered carbon dioxide after expansion.

Carbon dioxide is typically recovered from the "light" impurity-enriched gas by partial condensation and phase separation. In such embodiments, the "light" impurity-enriched gas is cooled by indirect heat exchange to condense carbon dioxide in the gas which is then recovered by phase separation.

It is also possible to recover carbon dioxide using a wash column. In such embodiments, the "light" impurity-enriched gas is optionally cooled by indirect heat exchange to condense carbon dioxide and then fed to a wash column in which further carbon dioxide is washed out of the uncondensed gas. Carbon dioxide-enriched liquid from the first column system may be used to wash the uncondensed vapor in the wash column. The "light" impurity-enriched gas may be cooled further by direct heat exchange with the washing liquid in the wash column.

The liquid/vapor ("L/V") ratio in the wash column is typically low in order to wash the small quantity of carbon dioxide out of the "light" impurity-enriched vapor. The L/V ratio is typically less than 1, e.g. less than 0.5 or even less than 0.2.

In embodiments such as these involving "cold" recovery of carbon dioxide, recovery typically takes place at a pressure that is as high as possible and/or practicable within the process, and at a temperature that is as low as possible and/or practicable within the process so as to maximize the recovery of carbon dioxide. For example, the pressure is typically the same as the operating pressure of the part of the second column distillation system from which the "light" impurity-enriched gas is taken (usually allowing for inherent pressure drop). The temperature is typically just above, e.g. a few degrees centigrade, or 1 to 3°C, above the temperature at which carbon dioxide would "freeze out" of the vapor.

In further embodiments, the "light" impurity-enriched gas may be warmed and carbon dioxide may recovered from the warm "light" impurity-enriched gas using a process selected from the group consisting of adsorption; absorption; and membrane separation. Such processes may be referred to as "warm" recovery processes.

Suitable adsorption processes include Temperature Swing Adsorption (TSA), Vacuum Swing Adsorption (VSA) and Pressure Swing Adsorption (PSA). Suitable absorption processes include amine-based systems or other chemical or physical solvent systems. Examples of suitable absorption processes include Selexol® and Rectisol®. In these embodiments, the recovered carbon dioxide may be sufficiently pure to be combined directly to the product rather than being fed to the first column system.

In membrane separation processes, carbon dioxide permeates the membranes and may be recompressed and fed to the second column system or recycled upstream of the "light" impurity removal step. Suitable membrane systems include polymeric membranes such as PRISM® membranes (Air Products and Chemicals, Inc.).

Carbon dioxide may also be recovered from the "light" impurity-enriched gas by and solidification and separation at a temperature below the triple point temperature for carbon dioxide. Where carbon dioxide is recovered by solidification, the solid carbon dioxide is separated by any suitable means from the residual gas at a temperature below the triple point temperature for carbon dioxide. The invention covers the use of a supersonic separator and hydrate separator supplied by Twister BV in this context.

The "light" impurity-rich residual gas is typically warmed by indirect heat exchange and purged from the process. In embodiments where the "light" impurity is combustible, *e*.*g*. selected from the group consisting of hydrogen; methane; C₂ hydrocarbons; carbon monoxide and mixtures thereof, the "light" impurity-rich residual gas may be used as a fuel for combustion to produce combustion product gas. In such embodiments, heat is preferably recovered from the combustion product gas by indirect heat exchange.

The recovered carbon dioxide is typically returned to the heat pump cycle at an appropriate point.

For example, in "cold" recovery processes, the recovered liquid is optionally heated by indirect heat exchange (so to avoid formation of solid carbon dioxide on expansion), expanded and vaporized by indirect heat exchange prior to being returned to a "cold" point in the heat pump cycle. In other embodiments, the recovered carbon dioxide liquid is optionally heated by indirect heat exchange (so to avoid formation of solid carbon dioxide on expansion), expanded, vaporized and heated by indirect heat exchange prior to being compressed and returned to a "warm" point in the heat pump cycle. In further embodiments, the recovered carbon dioxide liquid is optionally warmed by indirect heat exchange and used as reflux in the second distillation column system.

In "warm" recovery processes, the recovered carbon dioxide is typically compressed and fed to an appropriate point in the "warm" part of the heat pump cycle.

### Refrigeration duty

The refrigeration duty required to cool and at least partially condense at least one recycle fluid may be provided by indirect heat exchange against any suitable "cold" process stream.

By "refrigeration duty", the Inventors mean the cooling duty and, if applicable, the condensing duty required by the process.

By "cold process stream", the Inventors mean any fluid stream within the process whose temperature is lower than that of the fluid to be cooled and, where appropriate, condensed and whose pressure is suitable to provide the necessary indirect heat exchange. Suitable "cold" process streams include streams entering a main heat exchanger at the cold end. In preferred embodiments, the duty is provided by indirect heat exchange against at least one fluid selected from the group consisting of carbon dioxide-enriched liquid; intermediate liquid; bottoms liquid; liquid derived from bottoms liquid; and expanded crude carbon dioxide fluid.

The crude carbon dioxide fluid is cooled by indirect heat exchange prior to separation. At least a portion of the refrigeration duty required to cool and optionally condense the crude carbon dioxide fluid may be provided by indirect heat exchange with any suitable refrigerant stream although, in preferred embodiments, it is provided by indirect heat exchange against at least one "cold" process stream selected from the group consisting of carbon dioxide-enriched liquid; intermediate liquid; bottoms liquid from any column system; liquid derived from bottoms liquid; and expanded crude carbon dioxide fluid.

The feed may be derived from supercritical crude carbon dioxide fluid and carbon dioxide liquid is produced as a product. In these embodiments, the carbon dioxide liquid is typically removed from the first column system, pumped and warmed by indirect heat exchange to produce warmed carbon dioxide liquid as a product. At least a portion of the duty required to warm the pumped carbon dioxide liquid may be provided by indirect heat exchange against any suitable "warm" process stream although, in preferred embodiments, it is provided by indirect heat exchange against at least one of the recycle fluids.

The pumped carbon dioxide liquid is preferably used as a "cold" process stream to provide refrigeration duty for the process.

The feed may be derived from crude carbon dioxide vapor and carbon dioxide gas is produced as a product. In these embodiments, a portion of the carbon dioxide overhead vapor from the first column system is typically warmed by indirect heat exchange to produce the carbon dioxide gas. At least a portion of the duty required to warm said carbon dioxide overhead vapor may be provided by indirect heat exchange with any suitable "warm" process stream although, in preferred embodiments, it is provided by indirect heat exchange against at least one of the recycle fluids.

The carbon dioxide overhead vapor is preferably used as a "cold" process stream to provide refrigeration duty for the process.

A portion of bottoms liquid from the first column system, or liquid derived from said bottoms liquid, is usually pumped to provide "heavy" impurity-rich waste liquid. Since the pumped liquid is typically a small stream near ambient temperature, there may be no need to or advantage to warm it by indirect heat exchange, before disposal as a waste liquid. However, in embodiments in which the liquid is significantly below ambient temperature, the liquid may be used as a "cold" stream to provide refrigeration duty. At least a portion of the duty required to warm the pumped bottoms liquid may be provided by indirect heat exchange against any "warm" process stream although, in preferred embodiments, it is provided by indirect heat exchange against at least one of the recycle fluids.

The further portion of the bottoms liquid, or the liquid derived from bottoms liquid, is typically used as a "cold" process stream to provide refrigeration duty for the process.

An external refrigeration cycle may be used to provide at least a portion of the refrigeration duty required by the process, e.g. to cool the feed to the process thereby producing the cooled carbon dioxide fluid. However, in preferred embodiments, the entire process is auto-refrigerated, *i.e.* none of the refrigeration duty is provided by an external refrigeration cycle.

### Apparatus

The apparatus comprises:
a first heat exchanger for cooling said crude carbon dioxide fluid by indirect heat exchange to produce cooled crude carbon dioxide fluid;
a first column system in fluid flow communication with said first heat exchanger for separating said cooled crude carbon dioxide fluid by mass transfer separation to produce carbon dioxide-enriched overhead vapor comprising said "light" impurity, and "heavy" impurity-enriched bottoms liquid depleted in said "light" impurity;
at least one second heat exchanger for re-boiling by indirect heat exchange a "heavy" impurity-enriched liquid in or taken from said first column system to provide vapor for said first column system;
a third heat exchanger for cooling and at least partially condensing carbon dioxide-enriched overhead vapor, or a compressed carbon dioxide-enriched gas produced therefrom, by indirect heat exchange to produce at least partially condensed carbon dioxide-enriched gas comprising said "light" impurity;
a separation unit in fluid flow communication with said third heat exchanger for separating at least partially condensed carbon dioxide-enriched gas to produce "light" impurity-enriched gas and carbon dioxide-enriched liquid; and
a conduit arrangement for providing carbon dioxide-enriched liquid as reflux for said first column system,
wherein said apparatus comprises at least one heat pump cycle using as working fluid a fluid from said first column system; and
wherein the separation unit is a second distillation column system for mass transfer spearation.

By "fluid flow communication", the Inventors mean that the relevant parts of the apparatus are operationally arranged and/or interconnected such that fluid may flow between the parts as indicated. Fluid flow communication may be provided in any suitable way although the use of conduit arrangements, such as piping, is preferred. Fluid flow communication may also include, for example, pressure reduction arrangements, such as expansion valves; channels in a heat exchanger; and/or phase separation vessels, as required.

The apparatus may comprise a first pressure reduction arrangement between said third heat exchanger and said separation unit for expanding said at least partially condensed carbon dioxide-enriched gas prior to said separation unit.

The or at least one second heat exchanger is preferably arranged to re-boil an intermediate liquid in or taken from an intermediate location from said first column system. In these embodiments, the second heat exchanger is usually arranged to re-boil said intermediate liquid by indirect heat exchange against at least one recycle stream in said heat pump cycle(s) or carbon dioxide-enriched overhead vapor.

The or at least one other second heat exchanger is arranged to re-boil said "heavy" impurity-enriched bottoms liquid. In these embodiments, the second heat exchanger is preferably arranged to re-boil said bottoms liquid by indirect heat exchange against said crude carbon dioxide fluid.

In embodiments where the working fluid is carbon dioxide-enriched overhead vapor, said heat pump cycle typically comprises:
a fourth heat exchanger in fluid flow communication with said first column system for warming carbon dioxide-enriched overhead vapor by indirect heat exchange to produce warmed carbon dioxide-enriched gas;
a first compressor in fluid flow communication with said fourth heat exchanger for compressing said warmed carbon dioxide-enriched gas to produce said compressed carbon dioxide-enriched gas;
wherein said second heat exchanger is arranged to vaporize said "heavy" impurity-enriched liquid by indirect heat exchange against said compressed carbon dioxide-enriched gas.

The apparatus preferably comprises a fifth heat exchanger in said fluid flow communication between said first compressor and said second heat exchanger to cool said compressed carbon dioxide-enriched gas prior to said second heat exchanger.

The conduit arrangement for feeding said carbon dioxide-enriched liquid as reflux to said first column system typically comprises a sixth heat exchanger for cooling said liquid prior to said first column system and/or a second pressure reduction arrangement for expanding the liquid prior to said first column system.

The apparatus preferably comprises:
a third pressure reduction arrangement in fluid flow communication with said separation unit for expanding carbon dioxide-enriched liquid to produce expanded carbon dioxide-enriched liquid;
a seventh heat exchanger in fluid flow communication with said third pressure reduction arrangement for vaporizing said expanded carbon dioxide-enriched liquid by indirect heat exchange to produce carbon dioxide-enriched gas; and
a second compressor in fluid flow communication with said seventh heat exchanger for compressing carbon dioxide-enriched gas to produce compressed carbon dioxide-enriched product gas.

In these embodiments, the apparatus preferably comprises a eighth heat exchanger in said fluid flow communication between said separation unit and said third pressure reduction arrangement to warm said carbon dioxide-enriched liquid by indirect heat exchange prior to said expansion.

In some preferred embodiments, the apparatus comprises:
a fourth pressure reduction arrangement in fluid flow communication with said separation unit for expanding carbon dioxide-enriched liquid to produce expanded carbon dioxide-enriched liquid;
a ninth heat exchanger in fluid flow communication with said pressure reduction arrangement for vaporizing said expanded carbon dioxide-enriched liquid by indirect heat exchange to produce carbon-dioxide-enriched gas; and
a third compressor in fluid flow communication with said ninth heat exchanger for compression said carbon dioxide-enriched gas to produce compressed carbon dioxide-enriched product gas.

In some other preferred embodiments, the apparatus comprises:
a first pump in fluid flow communication with said separation unit for pumping carbon dioxide-enriched liquid to produce pumped carbon dioxide-enriched liquid;
a tenth heat exchanger in fluid flow communication with said first pump for vaporizing said pumped carbon dioxide-enriched liquid by indirect heat exchange to produce carbon dioxide-enriched product gas.

In these other preferred embodiments, the apparatus may comprise a fourth compressor in fluid flow communication with said tenth heat exchanger for compressing carbon dioxide-enriched product gas to produce compressed carbon dioxide-enriched product gas.

Preferably, the apparatus comprises:
an eleventh heat exchanger in fluid flow communication with said separation unit for warming "light" impurity-enriched gas by indirect heat exchange to produce warmed "light" impurity-enriched gas;
a fifth compressor in fluid flow communication with said eleventh heat exchanger for compressing said warmed "light" impurity-enriched gas to produce compressed "light" impurity-enriched gas; and
a twelfth heat exchanger in fluid flow communication with said fifth compressor arranged such that said compressed "light" impurity-enriched gas is at least partially condensed by indirect heat exchange.

The apparatus may comprise:
a thirteenth heat exchanger in fluid flow communication with said separation unit for cooling and partially condensing "light" impurity-enriched gas by indirect heat exchange to produce partially condensed "light" impurity-enriched gas; and
a first phase separator in fluid flow communication with said thirteenth heat exchanger for separating partially condensed "light" impurity-enriched to produce "light" impurity-rich residual gas and recovered carbon dioxide liquid.

In such embodiments, said apparatus preferably comprises a conduit arrangement for feeding recovered carbon dioxide liquid from said first phase separator as reflux to said second distillation column system. The conduit arrangement typically comprises a fourteenth heat exchanger for warming recovered carbon dioxide liquid by indirect heat exchange to produce warmed recovered carbon dioxide liquid prior to being fed as reflux to said second column system.

The apparatus may comprise:
a fifth pressure reduction arrangement in fluid flow communication with said first phase separator for expanding said recovered carbon dioxide liquid to produce expanded recovered carbon dioxide liquid;
a fifteenth heat exchanger in fluid flow communication with said fifth pressure reduction arrangement for vaporizing said expanded recovered carbon dioxide liquid by indirect heat exchange to produce recovered carbon dioxide gas; and
a conduit arrangement for combining recovered carbon dioxide gas with carbon dioxide-enriched overhead vapor prior to said fourth heat exchanger.

In such embodiments, the apparatus typically comprises a sixteenth heat exchanger in said fluid flow communication between first phase separator and said fifth pressure reduction arrangement for warming said recovered carbon dioxide liquid by indirect heat exchange prior to said expansion.

Additionally or alternatively, the apparatus may comprise:
a sixth pressure reduction arrangement in fluid flow communication with said first phase separator for expanding recovered carbon dioxide liquid to produce expanded recovered carbon dioxide liquid;
a seventeenth heat exchanger in fluid flow communication with said sixth pressure reduction arrangement for vaporizing and optionally warming expanded recovered carbon dioxide liquid by indirect heat exchange to produce warmed recovered carbon dioxide gas;
a sixth compressor in fluid flow communication with said seventeenth heat exchanger for compressing warmed recovered carbon dioxide gas to produce compressed recovered carbon dioxide gas; and
a conduit arrangement for combining compressed recovered carbon dioxide gas with warmed carbon dioxide-enriched gas prior to said fourth heat exchanger.

In some preferred embodiments, the apparatus comprises:
a eighteenth heat exchanger in fluid flow communication with said first phase separator for warming "light" impurity-rich residual gas by indirect heat exchange to produce warmed "light" impurity-rich residual gas; and
a vent in fluid flow communication with said eighteenth heat exchanger for purging said warmed "light" impurity-rich residual gas from said apparatus.

In embodiments where the working fluid is an intermediate liquid taken from said first column system, said heat pump cycle typically comprises:
a seventh pressure reduction arrangement in fluid flow communication with said first column system for expanding said intermediate liquid to produce expanded intermediate liquid;
a nineteenth heat exchanger in fluid flow communication with said seventh pressure reduction arrangement for vaporizing said expanded intermediate liquid by indirect heat exchange against said carbon dioxide-enriched overhead vapor to produce intermediate gas and said carbon dioxide-enriched liquid for use as said reflux to said first column system;
a seventh compressor in fluid flow communication with said nineteenth heat exchanger for compressing intermediate gas to produce compressed intermediate gas;
a twentieth heat exchanger in fluid flow communication with said seventh compressor for cooling compressed intermediate gas by indirect heat exchange to produce cooled intermediate gas; and
a conduit arrangement for feeding cooled intermediate gas from said twentieth heat exchanger to an intermediate location in said first column system to provide at least a portion of said vapor for said first column system.

In such embodiments, the apparatus usually comprises a twenty-first heat exchanger in said fluid flow communication between said nineteenth heat exchanger and said seventh compressor for warming said intermediate gas prior to said compression.

In preferred embodiments, the apparatus comprises an eighth pressure reduction arrangement for expanding said cooled crude carbon dioxide fluid prior to feeding to said first column system.

The apparatus may comprise:
a second pump in fluid flow communication with said first column system for pumping "heavy" impurity-enriched bottoms liquid to produce pumped bottoms liquid;
a twenty-second heat exchanger in fluid flow communication with said second pump for warming pumped bottoms liquid by indirect heat exchange to produce warmed bottoms liquid; and
a third pump in fluid flow communication with said twenty-second heat exchanger for pumping warmed bottoms liquid to produce pumped waste liquid.

Preferably, the apparatus comprises:
an eighth pressure reduction arrangement in said fluid flow communication between said first heat exchanger and said first column system for expanding at least partially condensed cooled crude carbon dioxide fluid; and
a twenty-third heat exchanger in said fluid flow communication between said first heat exchanger and said first column system for at least partially vaporizing expanded crude carbon dioxide fluid prior to said first column system.

The heat exchangers may be individual heat exchangers. However, in preferred embodiments, the heat exchangers are zones within at least one larger heat exchange unit. Preferably, the heat exchangers are zones within a single primary heat exchange unit which is typically a plate fin heat exchanger made of brazed aluminum.

The compressors may be individual compressors. However, in some embodiments, the compressors may be stages within one or more multistage intercooled compressor.

The distillation column systems may also comprise at least one vapor/liquid separator to separate a vapor component from reflux liquid for the column system, and/or to separate a liquid component from vapor for the column system generated from partially re-boiled liquid taken from the column system.

Where there are multiple units or devices of a similar type, the units or devices have been defined using the numerical terms "first", "second", "third" etc. It should be understood that these terms are intended solely to differentiate between different units or devices. The Inventors do not necessarily intend for embodiments of the apparatus to comprise the actual number units or devices. It is entirely likely that preferred embodiments will contain a selection of the units or devices referred to using non-sequential numerical terms.

The invention will now be further described by way of example only with reference to the comparative processes depicted in Figs. 1A, 1B & 2; the Reference Examples in Figs. 3, 4, 8, 9, 11 & 12, and preferred embodiments of the present invention depicted in Figs. 5 to 7 and 10. In the figures:

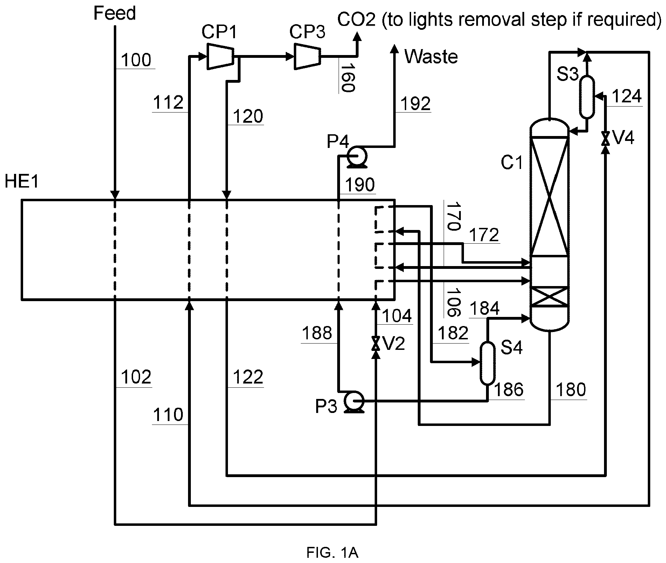

FIG. 1A is a flow sheet depicting a first comparative process for purifying crude carbon dioxide in which the "heavy" impurities are removed in a single distillation column system involving a heat pump at a single pressure;

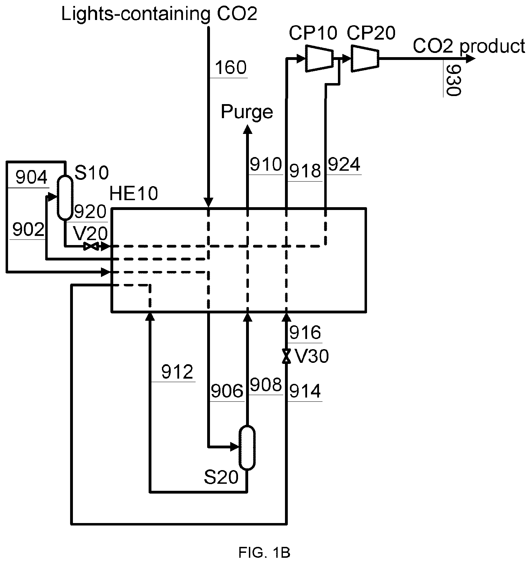

FIG. 1B is a flow sheet depicting a conventional process for removing "light" impurities from the carbon dioxide product of the process depicted in Fig. 1A.

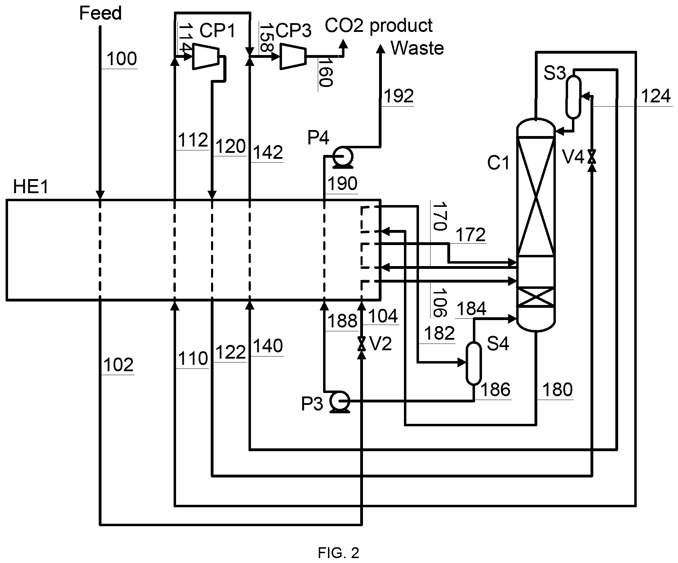

FIG. 2 is a flow sheet depicting a second comparative process for purifying crude carbon dioxide in which the "heavy" impurities are removed by mass transfer separation in the single column depicted in FIG. 1;

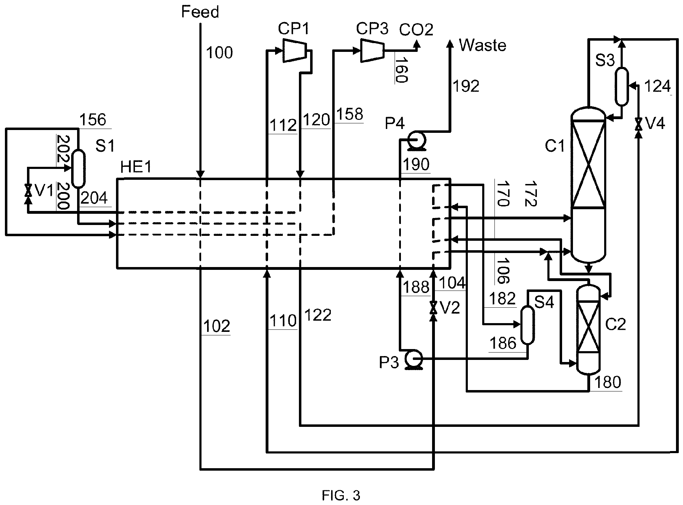

FIG. 3 is a flow sheet depicting Reference Example in which the process of FIG. 1 is modified such that the "heavy" impurities are removed in a split distillation column system and the "light" impurities are removed by partial condensation and phase separation of the recycle stream of the heat pump cycle;

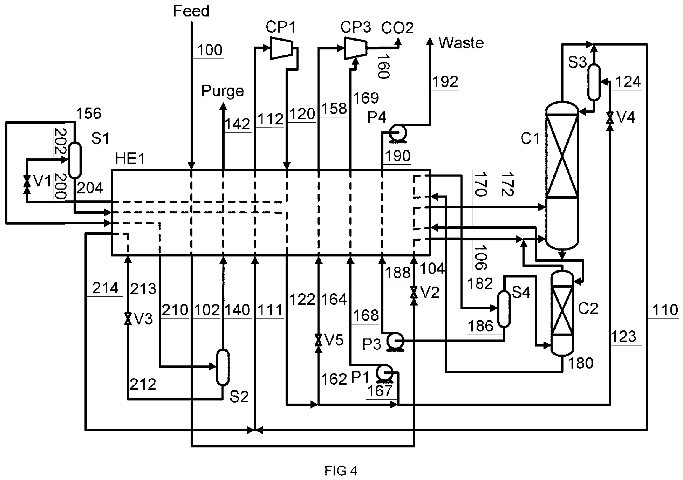

FIG. 4 is a flow sheet depicting a modification of the Reference Example of FIG. 3 in which carbon dioxide is recovered from the "light" impurity-enriched gas and in which carbon dioxide product is taken from the recycled working fluid;

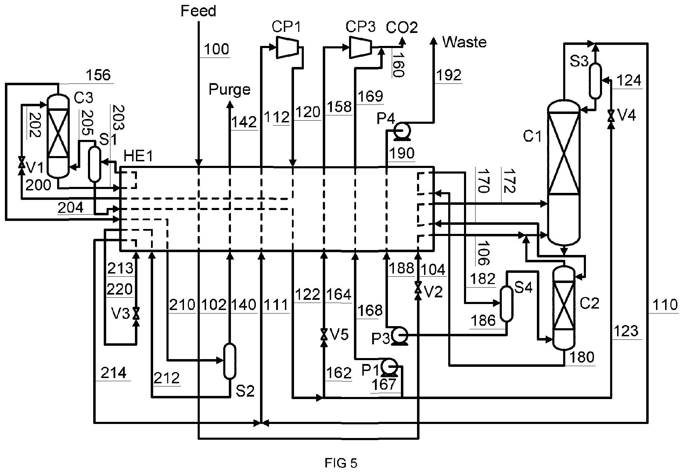

FIG. 5 is a flow sheet depicting an embodiment of the present invention based on a modification of the process of FIG. 4 in which "light" impurities are removed from the recycle stream by mass transfer separation in a second distillation column system;

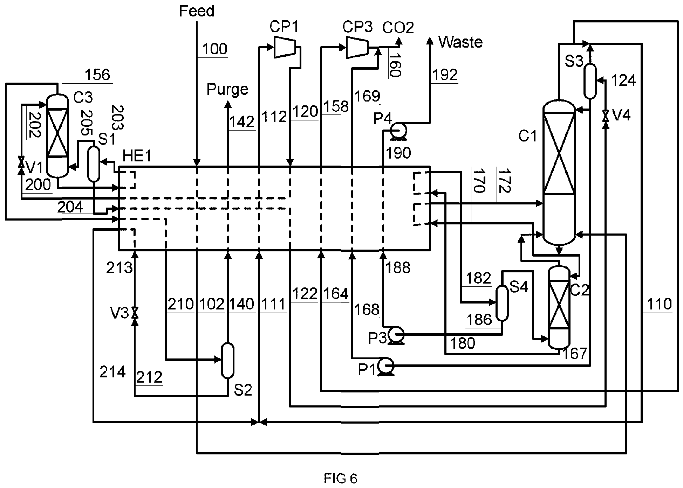

FIG. 6 is a flow sheet depicting a modification of the embodiment of FIG. 5 in which the feed is vapor at the operating pressure of the first column system and in which the carbon dioxide product is taken from flash liquid and overhead vapor from the first column system;

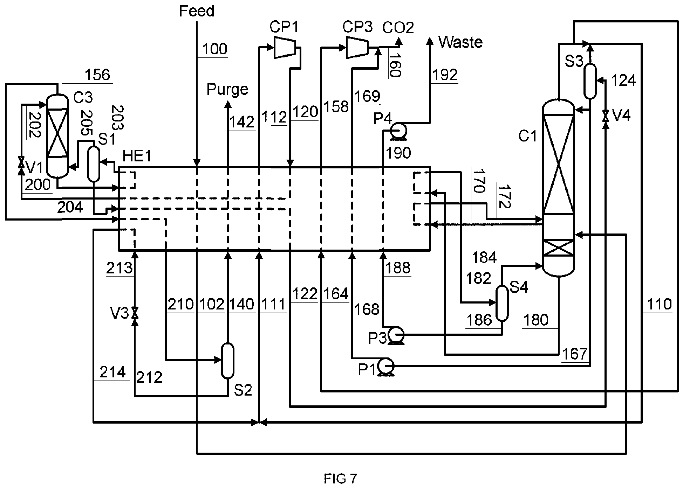

FIG. 7 is a flow sheet depicting a modification of the embodiment of FIG. 6 using a single distillation column to remove the "heavy" impurities;

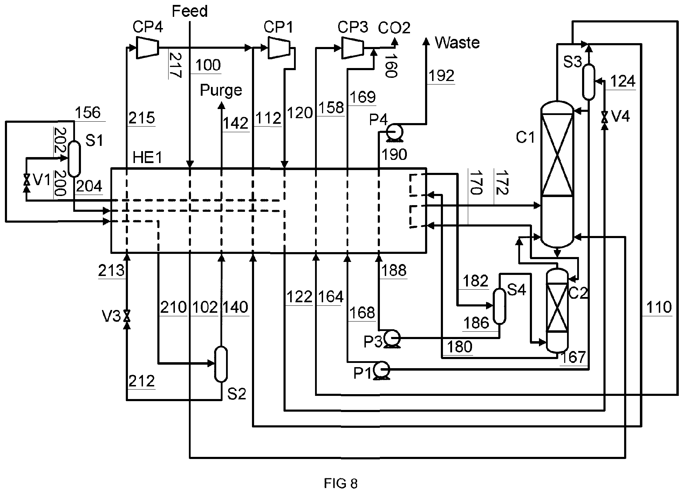

FIG. 8 is a flow sheet depicting, by way of a Reference Example, a different modification of the embodiment of FIG. 6 in which the recovered carbon dioxide liquid provides refrigeration duty and is recycled to the compressor feed of the heat pump cycle, and in which removal of the "light" impurities is by partial condensation and phase separation;

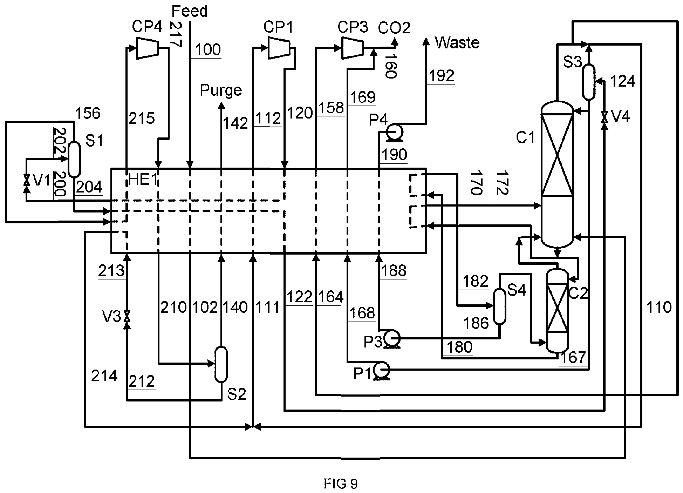

FIG. 9 is a flow sheet depicting a Reference Example involving a modification of the embodiment of FIG. 8 in which the feed to the process is a vapor at the operating pressure of the first column system and a second heat pump pressure (lower than the main heat pump pressure) is introduced to allow the feed to the phase separator S2 to operate at a higher pressure to improve carbon dioxide recovery;

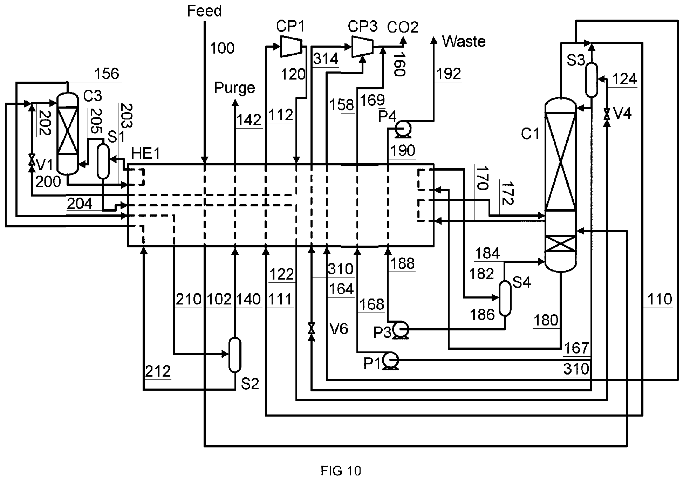

FIG. 10 is a flow sheet depicting a modification of the embodiment of FIG. 7 in which the recovered carbon dioxide liquid is used as reflux in the second distillation column system, and in which part of the carbon dioxide-enriched liquid is expanded before use in cooling and condensing the feed to the phase separator S2 by indirect heat exchange;

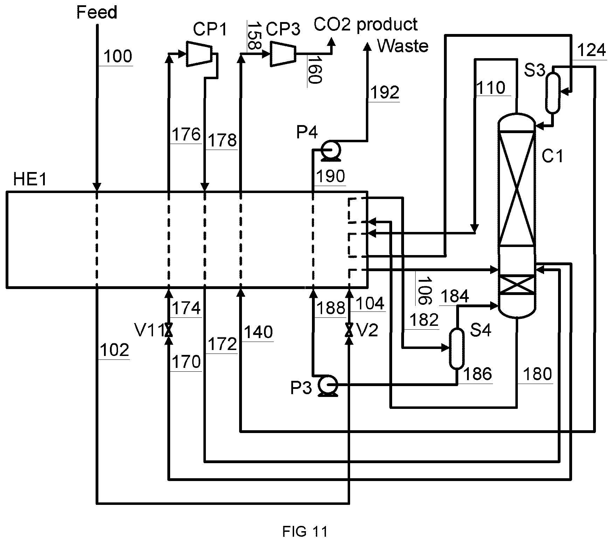

FIG. 11 is a flow sheet depicting a modification of the Reference Example of FIG. 3 in which the working fluid in the heat pump cycle is an intermediate liquid from the first column system, carbon dioxide-enriched overhead vapor is partially condensed by indirect heat exchange against vaporizing working fluid and in which the "light" impurities are removed from the partially condensed overhead vapor; and

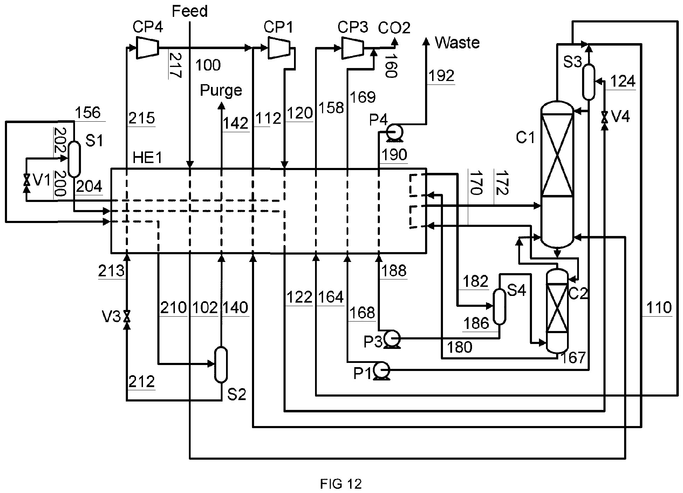

FIG. 12 is a flow sheet depicting a Reference Example in which carbon dioxide is recovered from the carbon dioxide-enriched overhead vapour by a warm recovery process, comprising the membrane unit M1.

In the process depicted in FIG. 1A, a stream 100 of crude carbon dioxide vapor is cooled and condensed by indirect heat exchange in main heat exchanger HE1 by indirect heat exchange to produce a stream 102 of crude carbon dioxide condensate. Stream 102 is expanded across expansion valve V2 to produce stream 104 of expanded crude carbon dioxide condensate which is then vaporized by indirect heat exchange in main heat exchanger HE1 to form stream 106 of crude carbon dioxide vapor and fed to distillation column system C1 for removal of the "heavy" impurities.

Crude carbon dioxide is separated in a distillation column C1 into "light" impurity-enriched carbon dioxide overhead vapor and "heavy" impurity-enriched bottoms liquid depleted in the "light" impurity. Reboil duty for the distillation column is provided at least in part by a recycle fluid in a heat pump cycle using overhead vapor as the working fluid. In this regard, overhead vapor is removed and fed as stream 110 to the main heat exchanger HE1 where it is warmed by indirect heat exchange to produce stream 112 which is compressed in compressor CP1 to produce compressed carbon dioxide gas. The compressed gas is divided into two portions. The first portion is further compressed in compressor CP3 and then fed as stream 160 to a downstream process, *e*.*g*. FIG 1B, for removal of "light" impurities. The second portion is fed as recycle stream 120 to the main heat exchanger HE1 where it is cooled and partially condensed to form stream 122 of partially condensed carbon dioxide gas. Stream 122 is expanded across valve V4 to produce stream 124 which is phase separated in phase separator vessel S3. The separated vapor is combined with the overhead vapor from column C1 to form stream 110 and the separated liquid is returned to the top of the distillation column C1 as reflux.

A stream 180 of "heavy" impurity-enriched bottoms liquid is removed from the distillation column C1 and partially vaporized by indirect heat exchange in the main heat exchanger HE1 against condensing feed. A stream 182 of partially vaporized bottoms liquid is fed to a phase separator S4 and the vapor phase is fed back to the column C1. The liquid phase is removed from the separator S4 as stream 186, pumped in pump P3 to form pumped stream 188, warmed by indirect heat exchange in HE1 to form a stream 190 of warmed bottoms liquid and pumped further in pump P4 to produce a stream 192 of waste liquid.

A stream 170 of liquid taken from an intermediate location in the distillation column C1 is fed to HE1 where it is at least partially vaporized by indirect heat exchange against condensing recycle fluid from the heat pump cycle to produce a stream 172 of at least partially vaporized intermediate liquid which is fed back to the distillation column C1.

In the process depicted in FIG. 1B, a stream of carbon dioxide containing "light" impurities, such as stream 160 in FIG. 1A, is fed to a heat exchange HE10 where it is cooled and partially condensed. The two-phase stream is phase separated in phase separator S10 into a vapor phase containing most of the "light" impurities and some carbon dioxide, and a liquid phase containing most of the carbon dioxide. The liquid phase 920 is expanded across valve V20, vaporized by indirect heat exchange in HE10 and compressed in CP20 to form the carbon dioxide product gas 930.

Carbon dioxide is recovered from the vapor phase 940 from S10 by cooling and partially condensing the vapor phase by indirect heat exchange in HE10 and subsequent phase separation in phase separator S20. The further vapor phase 908 is warmed by indirect heat exchange in HE10 and purged from the process. The further liquid phase 912 is warmed by indirect heat exchange in HE10, expanded across valve V30, vaporized by indirect heat exchange in HE10, compressed in compressor CP10 and combined with the vaporized liquid phase from S10 prior to further compression in CP20 to produce the product gas 930.

The process depicted in Fig. 2 is a modification of the process of Fig. 1A in which "light" impurities are removed from the recycle fluid of the heat pump cycle in separator S3 operating at the pressure of column C1. The features of Fig. 2 that are common to Fig. 1A have been given the same reference numerals. The following is a discussion of the features of Fig. 2 that distinguish the process over that depicted in Fig. 1A.

In Fig. 2, the vapor from separator S3 is not combined with the overhead vapor from column C1. Instead, a stream 140 of the vapor from separator S3 is warmed by indirect heat exchange in HE1 to produce a warmed stream 142. The stream 112 of warmed carbon dioxide-enriched gas is divided into two portions. The first portion, stream 114, is compressed in compressor CP1 and the compressed stream 120 is recycled as in Fig. 1A. The second portion is combined with stream 142 to provide a combined stream 158 which is compressed in compressor CP3 to provide the stream 160 of carbon dioxide product gas.

The process depicted in Fig. 3 is a modification of the process of Fig. 1A & B in which "light" impurities are removed from the recycle fluid of the heat pump cycle at the recycle pressure (by partial condensation and phase separation in S1) rather than at the column pressure. The features of Fig. 3 which are common to Fig. 1A & B have been given the same reference numerals. The following is a discussion of the feature of Fig. 3 that distinguish the process over that depicted in Figs. 1A & B.

In Fig. 3, the first column system is a split column, C1/C2. The feed stream 106 is fed to the bottom of the upper column C1. Bottoms liquid from the upper column C1 (which is an "intermediate liquid" of the first column system) is removed as stream 170, reboiled in HE1 against recycle fluid in the heat pump cycle and returned to the upper column C1 as stream 172. Bottoms liquid from the upper column C1 is also used to provide reflux to the lower column C2. Overhead vapor from the lower column C2 is combined with the feed 106 to the upper column C1. Bottoms liquid from the lower column C2 is removed as stream 180 and reboiled in HE1 against condensing feed 100. The return stream 182 is fed to separator S4 and the vapor part is return to the lower column C2. The liquid part 186 is processed as in Fig. 1.

Compressed carbon dioxide-enriched gas 120 from CP1 is cooled by indirect heat exchange in HE1 to produce a partially condensed fluid 200 which, after suitable pressure reduction V1, is fed as stream 202 to a separator S1 where it is separated into "light" impurity-enriched overhead vapor 156 and a liquid phase 204 enriched in carbon dioxide.

The vapor phase 156 is warmed by indirect heat exchange in HE1 and the warmed gas 158 is compressed in compressed in compressor CP3 to produce the carbon dioxide product gas 160. The liquid phase is subcooled and by indirect heat exchange in HE1 to produce subcooled carbon dioxide-enriched liquid 122 which is then returned as reflux to the first column system as in Fig. 1A.

The process depicted in Fig. 4 is a modification of the process of Fig. 3 in which (i) carbon dioxide is recovered from the "light" impurity-enriched vapor 156 from S1; and (ii) carbon dioxide product gas is produced differently. The features of Fig. 4 which are common to Fig. 3 have been given the same reference numerals. The following is a discussion of the features of Fig. 4 that distinguish the process over that depicted in Fig. 3.

The "light" impurity-enriched vapor 156 from S1 is cooled and partially condensed by indirect heat exchange in HE1. The partially condensed vapor 210 is separated in separator S2 into "light" impurity-rich gas 140 and recovered carbon dioxide liquid 212. The "light" impurity-rich gas is warmed by indirect heat exchanger in HE1 and the warmed gas 142 is purged from the process. The recovered carbon dioxide liquid 212 is vaporized (after suitable pressure reduction V3) by indirect heat exchange and combined with the carbon dioxide-enriched overhead vapor 110 in the heat pump cycle.

The carbon dioxide-enriched liquid 122 is divided into three portions. A first portion 162 is expanded across expansion valve V5 and the expanded liquid 164 is vaporized and warmed by indirect heat exchange in HE1. The warmed gas 158 is compressed in compressor CP3 to produce carbon dioxide product gas. A second portion 167 is pumped in pump P1 and the pumped liquid 168 is vaporized and warmed by indirect heat exchange in HE1. The warmed gas 169 is then compressed in compressor CP3 although, since it is already at a higher pressure than warmed gas 158, it is fed to a intermediate stage in the compressor. The third portion 123 is used to provide reflux in the first column system as in Fig. 3.

The process depicted in Fig. 5 is a modification of the process of Fig. 4 in which (i) "light" impurities are removed by mass transfer in a second distillation column system; and (ii) recovered carbon dioxide liquid is warmed prior to expansion across V3. The features of Fig. 5 which are common to Fig. 4 have been given the same reference numerals. The following is a discussion of the features of Fig. 5 that distinguish the process over that depicted in Fig. 4.

At least partially condensed carbon dioxide-enriched gas 200 is expanded across expansion valve V1 and the expanded fluid 202 is fed to column C3 where it is separated into the "light" impurity-enriched vapor 156 and carbon dioxide-enriched bottoms liquid. The column C3 is re-boiled by partially vaporizing bottoms liquid by indirect heat exchanger in HE1. The partially vaporized fluid is separated in S1 with the vapor being returned to the column C3 and the carbon dioxide-enriched liquid 204 being cooled to form cooled liquid 122.

The recovered carbon dioxide liquid 212 from S2 is warmed by indirect heat exchange in HE1 prior to expansion of the warmed stream 220 across expansion valve V3 in order to prevent formation of solid carbon dioxide on expansion. The warming of the recovered liquid has the added benefit of de-coupling operation of the separator S2 from the first column system, thereby enabling the separator to be operated at a lower temperature which in turn increases recovery of carbon dioxide.

The process depicted in Fig. 6 is a modification of the process of Fig. 5 in which the feed is a vapor at the operating pressure of column C1 and in which carbon dioxide product is formed from a combination of carbon dioxide-enriched overhead vapor from column C1 and carbon dioxide-enriched liquid from separator S3. The features of Fig. 6 which are common to Fig. 5 have been given the same reference numerals. The following is a discussion of the features of Fig. 6 that distinguish the process over that depicted in Fig. 5.

In Fig. 6, the crude carbon dioxide fluid 100 is a vapor which is cooled by indirect heat exchange in HE1. The cooled vapor 102 is then fed to column C1 without pressure adjustment. In addition, the liquid phase from separator S3 is divided into two portions. The first portion is used to provide reflux to column C1. The second portion 167 is pumped in pump P1 and the pumped liquid 168 is vaporized and warmed by indirect heat exchange in HE1 to produce warmed carbon dioxide gas 169.

Overhead vapor from column C1 is divided into two portions. The first portion 110 is used as working fluid for the heat pump cycle as in Fig. 5. The second portion 164 is warmed by indirect heat exchange in HE1 and the warmed gas 158 is compressed in compressor CP3 to produce compressed carbon dioxide which is combined with the warmed carbon dioxide gas 169 to produce the carbon dioxide product 160.

The process depicted in Fig. 7 is a modification of the process of Fig. 6 in which the first column system is a single column C1. The features of Fig. 7 which are common to Fig. 6 have been given the same reference numerals. Operation of a first column system having a single column C1 is discussed above in relation to Fig. 1A.

The process depicted in Fig. 8 is a modification of the process of Fig. 6 in which (i) the "light" impurities are removed by partial condensation and phase separation as in Figs. 3 & 4 discussed above, and (ii) the recovered carbon dioxide liquid 212 is expanded across valve V3, vaporized and warmed by indirect heat exchange in HE1 to produce warmed gas 215 which is compressed in compressor CP4 before combining the compressed gas 217 with the feed to compressor CP1 in the heat pump cycle. The features of Fig. 8 which are common to Figs. 3, 4 & 6 have been given the same reference numerals.

The process depicted in Fig. 9 is a modification of the process of Fig. 8 in which the "light" impurity-enriched vapor 156 is warmed by indirect heat exchange in HE1 and the warmed gas 215 is compressed in compressor CP4. The compressed gas 217 (which is at a lower pressure than the recycle gas 120 in the main heat pump cycle) is cooled and partially condensed by indirect heat exchange in HE1 and the partially condensed fluid 210 is fed to separator S2 for recovery of carbon dioxide as in, for example, Fig. 4. In this way, the process of Fig. 9 has a second heat pump cycle. The features of Fig. 9 which are common to Figs. 4 & 8 have been given the same reference numerals.

The process depicted in Fig. 10 is a modification of the process of Fig. 7 in which the recovered carbon dioxide liquid 212 is warmed by indirect heat exchange in HE1 and then used to provide reflux to column C3. In addition, the carbon dioxide-enriched liquid from S3 is divided into three portions. The first portion is used to reflux the upper column C1 as in Fig. 7. The second portion 167 is pumped and vaporized to provide carbon dioxide product gas, also as in Fig. 7. The third portion 310 is expanded across valve V6, vaporized and warmed by indirect heat exchange in HE1 and the warmed gas 314 is compressed in compressor CP3. Since the pressure of warmed carbon dioxide-enriched gas 158 is greater than warmed gas 314, stream 158 is fed to an intermediate stage of compressor CP3. The features of Fig. 10 which are common to Fig. 7 have been given the same reference numerals.

The process of Fig. 11 is a modification of the process of Fig. 3 in which "heavy" impurities are removed in a single column C1 as in Fig. 1A. In addition, the working fluid of the heat pump cycle is an intermediate liquid from column C1. The features of Fig. 11 which are common to Figs. 1A & 3 have been given the same reference numerals. The following is a discussion of the features of Fig. 11 that distinguish the process over that depicted in Figs. 1A & 3.

The intermediate liquid 170 is expanded across expansion valve V11 and the expanded liquid 174 is vaporized by indirect heat exchange in HE1 against condensing carbon dioxide-enriched overhead vapor 110 from column C1. Warmed intermediate gas 176 is compressed in compressor CP1 and the compressed intermediate gas 178 is cooled by indirect heat exchange in HE1. The cooled gas 172 is returned to column C1.

The carbon dioxide-enriched overhead vapor 110 is partially condensed in HE1 to form stream 124 that is fed to separator S3. As in other figures, the vapor phase 140 is used to provide carbon dioxide product gas, and the liquid phase is used to provide reflux to column C1.

The process of Fig. 12 is a modification of the process of Fig. 5 in which "light" impurity-enriched vapor 156 from column C3 is warmed by indirect heat exchange in HE1 to provide warmed gas 310. Carbon dioxide is recovered from warmed gas 310 using a membrane separation system M1 to produce "light" impurity-rich gas 312 and recovered carbon dioxide gas 142. The "light" impurity-rich gas 314 is compressed in compressor CP5 and the compressed gas 316 is returned to the heat pump cycle at the feed to compressor CP1. The features of Fig. 12 which are common to Fig. 5 have been given the same reference numerals.

### COMPARATIVE EXAMPLE

The process depicted in Fig. 1A was modeled by computer using ASPEN™ Plus software (version 7.2; ©Aspen Technology, Inc.) using measured vapor-liquid equilibrium data in the composition and pressure/temperature range of interest. The heat and mass balance data for key streams are provided in Table 1.

According to the modeling, the process of the comparative example recovers 99.3% of the carbon dioxide in the feed at a purity of 91.1 mol. %, and consumes about 23,775 kW of power in total. This figure represents the sum of the power required for compressors CP1 and CP3 (23,682 kW) and pumps P3 and P4 (92 kW).

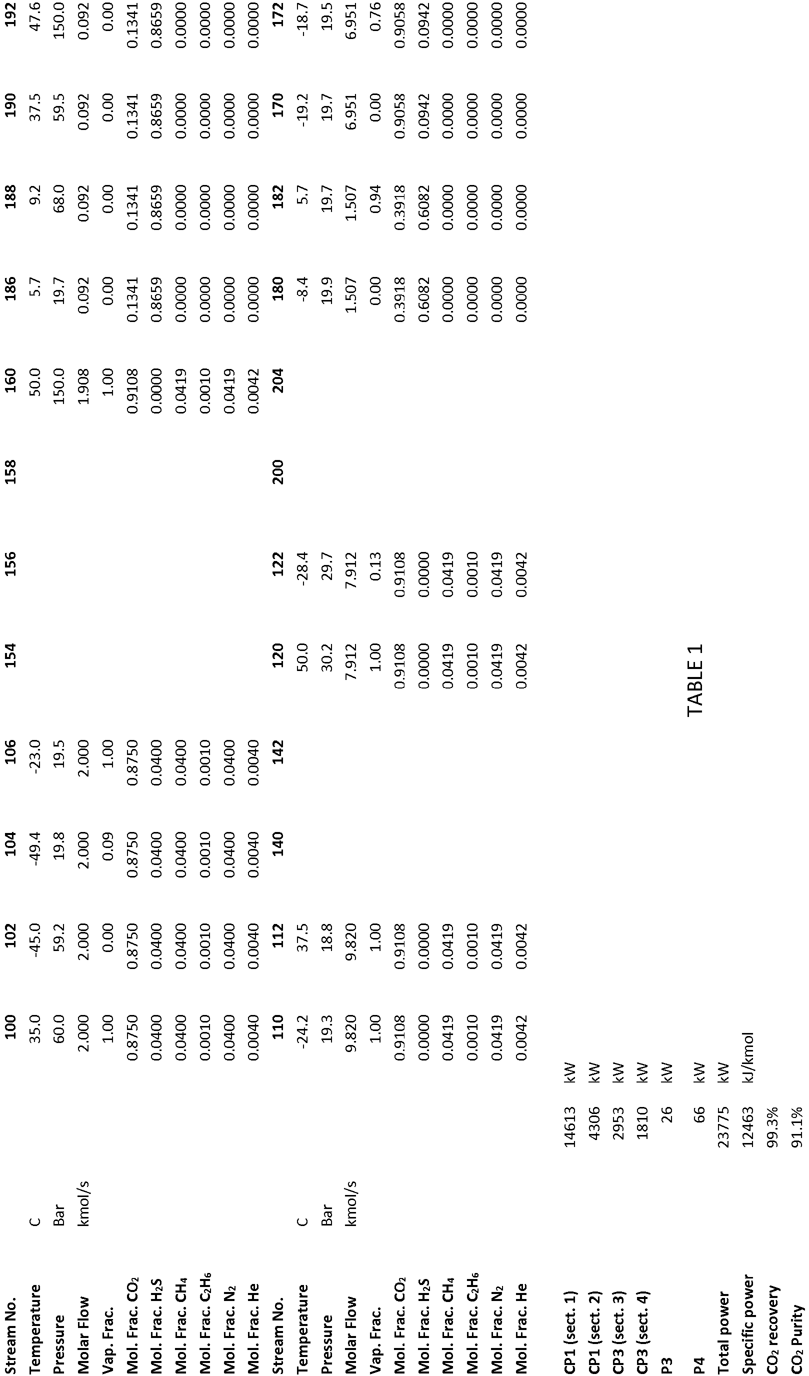

### REFERENCE EXAMPLE 1

The process depicted in FIG. 3 was modeled by computer using ASPEN™ Plus software (version 7.2; © Aspen Technology, Inc.) using measured vapor-liquid equilibrium data in the composition and pressure/temperature range of interest. The heat and mass balance data for key streams are provided in Table 2.

According to the modeling, the exemplified process recovers 99% of the carbon dioxide in the feed at a purity of 91.1 mol. %, and consumes about 20,013 kW of power in total. This figure represents the sum of the power required for compressors CP1 and CP3 (19,915 kW) and pumps P3 and P4 (98 kW). The exemplified process therefore saves 16.2% of the power of the comparative example (or 15.6% on a specific power basis).

It should be noted that these figures do not take into account the power consumed by the conventional "light" impurity removal process depicted in FIG. 1B. Therefore, the total and specific power savings of FIG. 3 would actually be significantly more than that indicated above if FIG. 1B were taken into account.

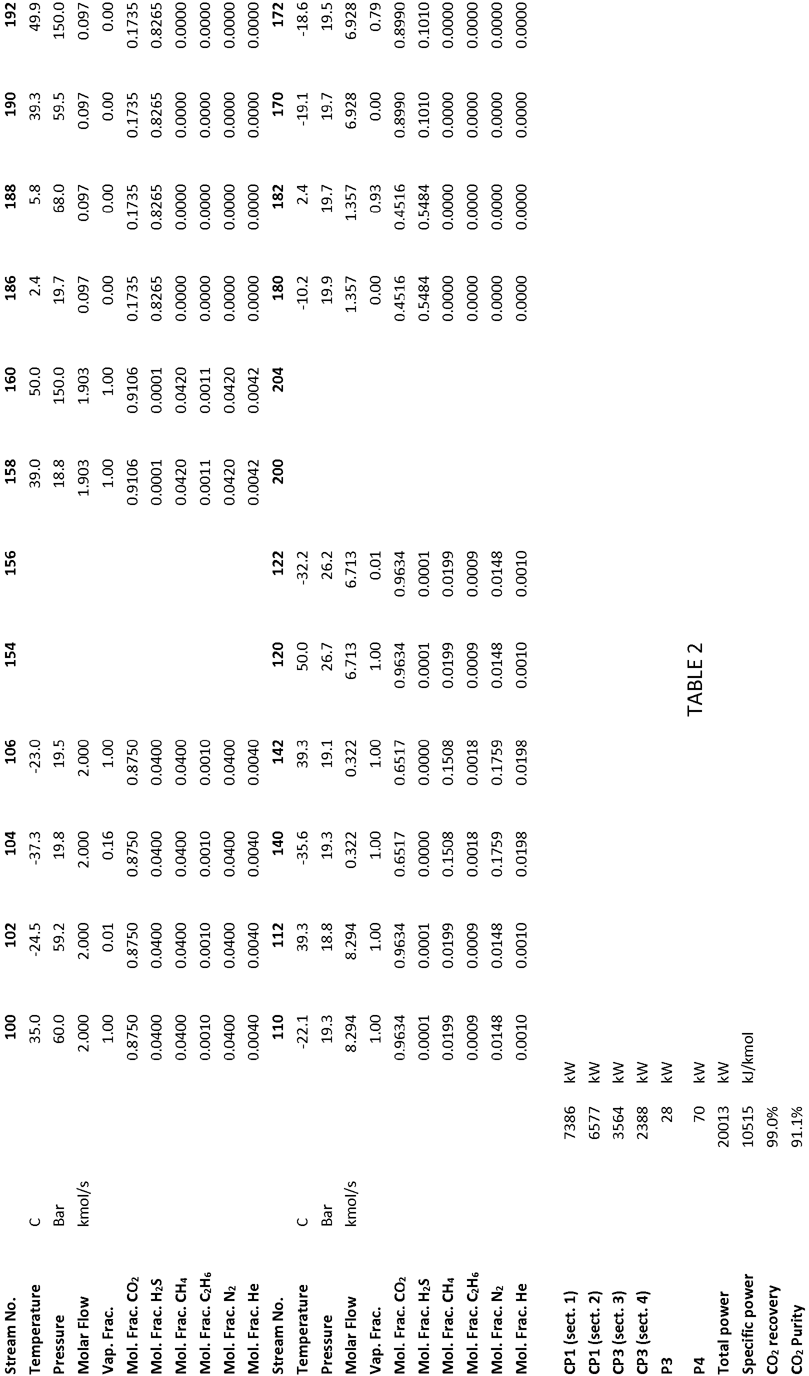

### REFERENCE EXAMPLE 2

The process depicted in FIG. 4 was modeled by computer using ASPEN™ Plus software (version 7.2; © Aspen Technology, Inc.) using measured vapor-liquid equilibrium data in the composition and pressure/temperature range of interest. The heat and mass balance data for key streams are provided in Table 3.

According to the modeling, the exemplified process recovers 99% of the carbon dioxide in the feed at a purity of 91.1 mol. %, and consumes about 18,527 kW of power in total. This figure represents the sum of the power required for compressors CP1 and CP3 (18,428 kW) and pumps P3 and P4 (100 kW). The exemplified process therefore saves 22.5% of the power of the comparative example (or 21.9% on a specific power basis).

It should be noted that these figures do not take into account the power consumed by the conventional "light" impurity removal process depicted in FIG. 1B. Therefore, the total and specific power savings of FIG. 4 would actually be significantly more than that indicated above if FIG. 1B were taken into account.

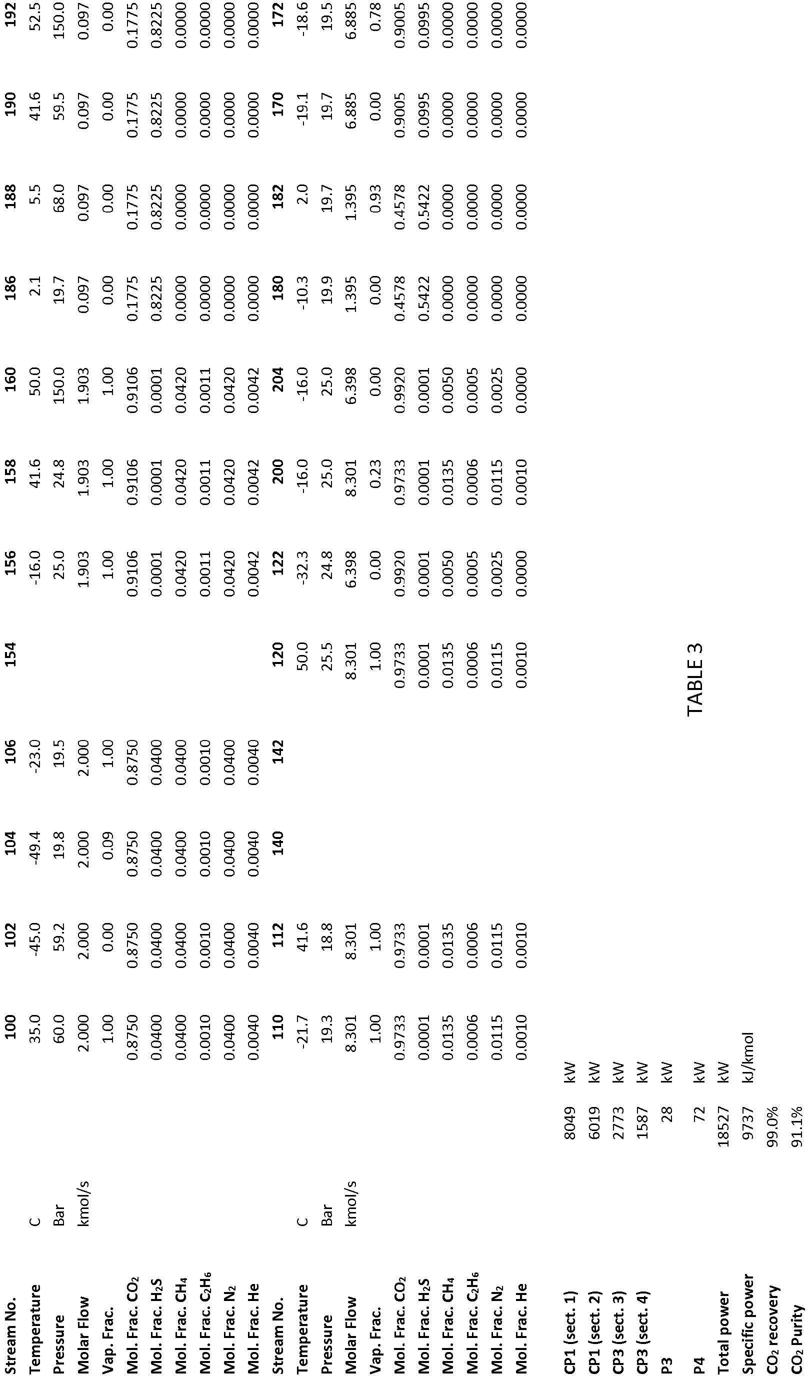

### EXAMPLE 3

The process depicted in FIG. 5 was modeled by computer using ASPEN™ Plus software (version 7.2; © Aspen Technology, Inc.) using measured vapor-liquid equilibrium data in the composition and pressure/temperature range of interest. The heat and mass balance data for key streams are provided in Table 4.

According to the modeling, the exemplified process recovers 94.9% of the carbon dioxide in the feed at a purity of 97.3 mol. %, and consumes about 17,801 kW of power in total. This figure represents the sum of the power required for compressors CP1 and CP3 (17,511 kW) and pumps P1, P3 and P4 (290 kW). The exemplified process therefore saves 26.7% of the power of the comparative example (or 16.3% on a specific power basis).

It should be noted that these figures do not take into account the power consumed by the conventional "light" impurity removal process depicted in FIG. 1B. Therefore, the total and specific power savings of FIG. 5 would actually be significantly more than that indicated above if FIG. 1B were taken into account.

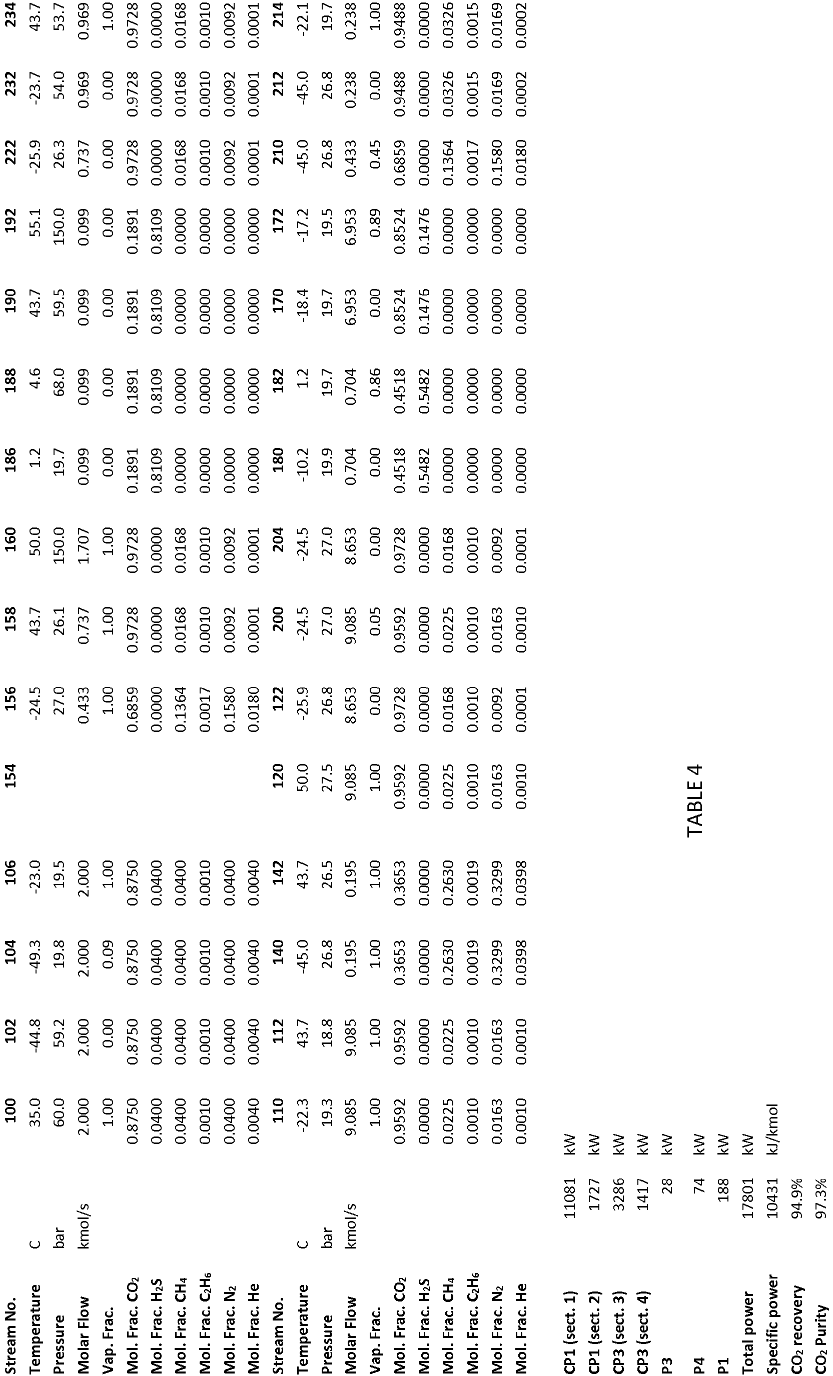

### EXAMPLE 4

The process depicted in FIG. 6 was modeled by computer using ASPEN™ Plus software (version 7.2; © Aspen Technology, Inc.) using measured vapor-liquid equilibrium data in the composition and pressure/temperature range of interest. The heat and mass balance data for key streams are provided in Table 5.

According to the modeling, the exemplified process recovers 93.2% of the carbon dioxide in the feed at a purity of 99.5 mol. %, and consumes about 19,089 kW of power in total. This figure represents the sum of the power required for compressors CP1 and CP3 (18,839 kW) and pumps P1, P3 and P4 (250 kW). The exemplified process therefore saves 19.3% of the power of the comparative example (or 6.6% on a specific power basis).

It should be noted that these figures do not take into account the power consumed by the conventional "light" impurity removal process depicted in FIG. 1B. Therefore, the total and specific power savings of FIG. 6 would actually be significantly more than that indicated above if FIG. 1B were taken into account.

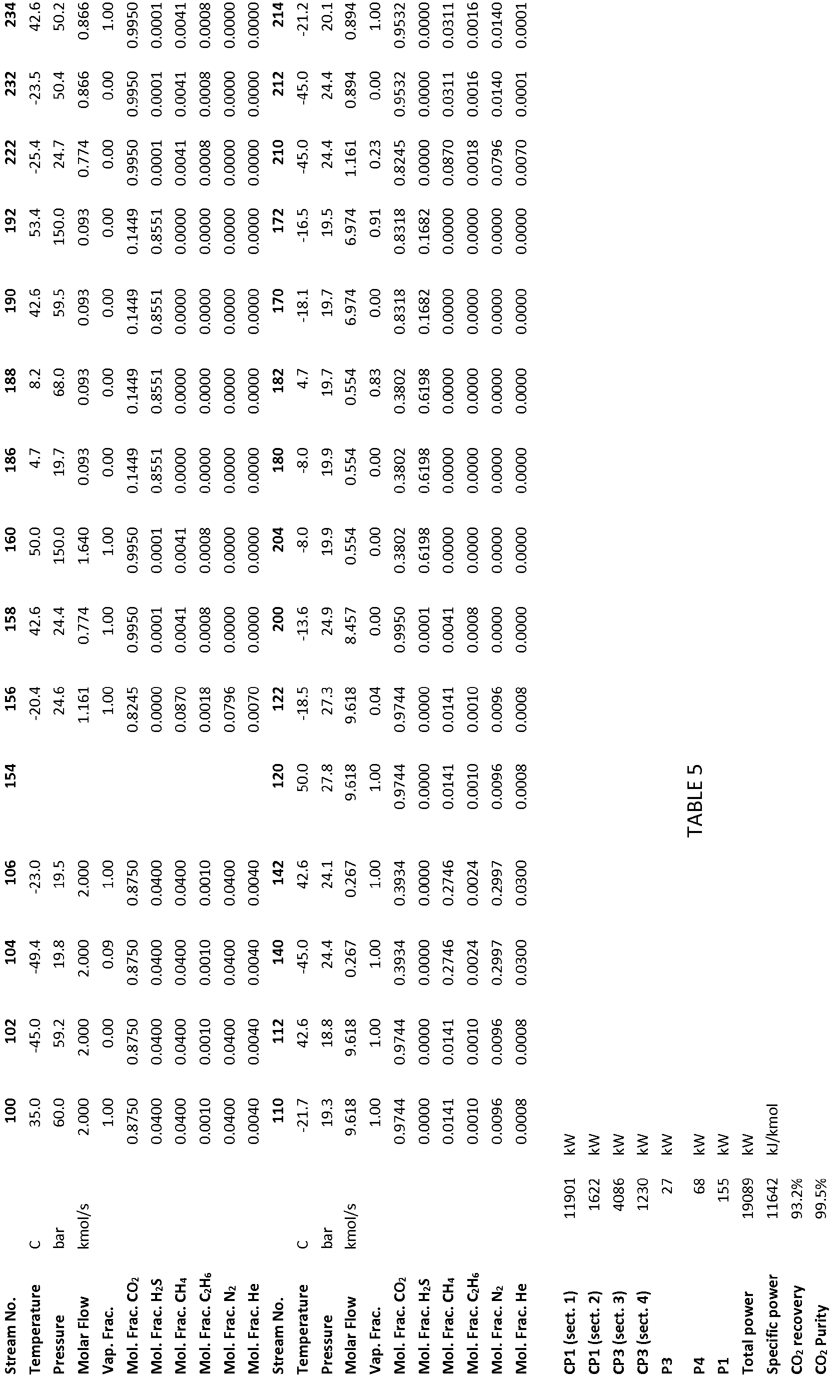

While the invention has been described with reference to the preferred embodiments depicted in the figures, it will be appreciated that various modifications are possible within the scope of the invention.

In this specification, the word 'comprising' is used in the sense of 'including' rather than to mean 'consisting of'.

## Claims

1. A process for purifying crude carbon dioxide fluid comprising at least one "light" impurity and at least one "heavy" impurity, said process comprising:
cooling said crude carbon dioxide fluid above the triple point pressure of carbon dioxide by indirect heat exchange to produce cooled crude carbon dioxide fluid;
feeding said cooled crude carbon dioxide fluid to a first column system (C1, C2) for mass transfer separation to produce carbon dioxide-enriched overhead vapor comprising said "light" impurity, and "heavy" impurity-enriched bottoms liquid depleted in said "light" impurity;
re-boiling said first column system (C1, C2) by at least partially vaporizing at least one "heavy" impurity-enriched liquid in or taken from said first column system by indirect heat exchange to provide vapor for said first column system;
cooling and at least partially condensing carbon dioxide-enriched overhead vapor, or a compressed carbon dioxide-enriched gas produced therefrom, by indirect heat exchange to produce at least partially condensed carbon dioxide-enriched gas comprising said "light" impurity;
separating said at least partially condensed carbon dioxide-enriched gas by mass transfer separation in a second distillation column system (C3) to produce "light" impurity-enriched gas, and carbon dioxide-enriched liquid; and
providing at least a portion of said carbon dioxide-enriched liquid as reflux for said first column system (C1, C2),
wherein said first column system (C1, C2) operates above the triple point pressure and below the critical pressure of carbon dioxide; and
wherein said process comprises at least one heat pump cycle (110, 111, 112, CP1, 120, 200, V1, 202, C3, S1, 204, 122, 123, V4, 124, 53) using as working fluid a fluid from said first column system.

2. A process according to Claim 1, wherein said at least partially condensed carbon dioxide-enriched gas is expanded prior to said separation to produce said "light" impurity-enriched gas and said carbon dioxide-enriched liquid.

3. A process according to Claim 1 or Claim 2, wherein said carbon dioxide-enriched overhead vapor, or said compressed carbon dioxide-enriched gas produced therefrom, is partially condensed by said indirect heat exchange to produce partially condensed carbon dioxide-enriched gas.

4. A process according to any of Claims 1 to 3, wherein said "heavy" impurity-enriched liquid(s) providing vapor for said first column system (C1, C2) comprises an intermediate liquid in or taken from an intermediate location in said first column system (C1, C2).

5. A process according to any of the preceding claims, wherein said "heavy" impurity-enriched liquid(s) providing vapor for said first column system (C1, C2) comprises said "heavy" impurity-enriched bottoms liquid.

6. A process according to any of the preceding claims, wherein carbon dioxide is recovered from said "light" impurity-enriched gas producing a "light" impurity-rich residual gas which is optionally purged from the process.

7. A process according to any of the preceding claims, wherein said working fluid is carbon dioxide-enriched overhead vapor, said heat pump cycle comprising:
warming said carbon dioxide-enriched overhead vapor by indirect heat exchange to produce warmed carbon dioxide-enriched gas; and
compressing said warmed carbon dioxide-enriched gas to produce said compressed carbon dioxide-enriched gas,
wherein said compressed carbon dioxide-enriched gas is used to provide at least part of the vaporization duty required for at least partially vaporizing said "heavy" impurity-enriched liquid(s), thereby cooling and partially condensing said carbon dioxide-enriched gas to produce partially condensed carbon dioxide-enriched gas comprising said "light" impurity.

8. A process according to Claim 7, wherein carbon dioxide is recovered from said "light" impurity-enriched gas to produce "light" impurity-rich residual gas and recovered carbon dioxide.

9. A process according to any of Claim 1 to 6, wherein said working fluid is an intermediate liquid taken from said first column system, said heat pump cycle comprising:
expanding said intermediate liquid to produce expanded intermediate liquid;
vaporizing said expanded intermediate liquid by indirect heat exchange against said carbon dioxide-enriched overhead vapor to produce intermediate gas and said carbon dioxide-enriched liquid for use as said reflux to said first column system (C1, C2);
compressing said intermediate gas to produce compressed intermediate gas; and
cooling said compressed intermediate gas by indirect heat exchange to produce cooled intermediate gas,
wherein said cooled intermediate gas is fed to an intermediate location in said first column system to provide at least a portion of said vapor for said first column system (C1, C2).

10. A process according to any of the preceding claims, wherein at least one "heavy" impurity is hydrogen sulfide.

11. A process according to Claim 10, wherein at least one "light" impurity is selected from the group consisting of nitrogen; argon; helium; methane; and ethane.

12. A process according to Claim 6, wherein said "light" impurity-rich residual gas comprises methane, nitrogen and helium, said process comprising rejecting nitrogen and helium from methane and recovering helium from the rejection process.

13. A process according to any of the preceding claims, wherein the operating pressure(s) of said first column system (C1, C2) is from about 5.2 bar to about 40 bar, and preferably from 15 bar to about 25 bar.

14. Apparatus for purifying crude carbon dioxide fluid comprising at least one "light" impurity and at least one "heavy" impurity, said apparatus comprising:
a first heat exchanger (HE1) for cooling said crude carbon dioxide fluid (100) by indirect heat exchange to produce cooled crude carbon dioxide fluid (102);
a first column system (C1, C2) in fluid flow communication with said first heat exchanger (HE1) for separating said cooled crude carbon dioxide fluid (102) by mass transfer separation to produce carbon dioxide-enriched overhead vapor (110) comprising said "light" impurity, and "heavy" impurity-enriched bottoms liquid (180) depleted in said "light" impurity;
at least one second heat exchanger (HE1) for re-boiling by indirect heat exchange a "heavy" impurity-enriched liquid (180) in or taken from said first column system (C1, C2) to provide vapor for said first column system (C1, C2);
a third heat exchanger (HE1) for cooling and at least partially condensing carbon dioxide-enriched overhead vapor, or a compressed carbon dioxide-enriched gas produced therefrom (120), by indirect heat exchange to produce at least partially condensed carbon dioxide-enriched gas (200) comprising said "light" impurity;
a separation unit (C3) in fluid flow communication with said third heat exchanger (HE1) for separating at least partially condensed carbon dioxide-enriched gas (200) to produce "light" impurity-enriched gas (156) and carbon dioxide-enriched liquid (204); and
a conduit arrangement (122, 123, 124) for providing carbon dioxide-enriched liquid as reflux for said first column system (C1, C2),
wherein said apparatus comprises at least one heat pump cycle (110, 111, 112, CP1, 120, 200, V1, 202, C3, S1, 204, 122, 123, V4, 124, S3) using as working fluid a fluid from said first column system (C1, C2); and
wherein said separation unit is a second distillation column system (C3) for mass transfer separation.

15. Apparatus according to Claim 14, comprising a first pressure reduction arrangement (V1) between said third heat exchanger (HE1) and said separation unit (C3) for expanding said at least partially condensed carbon dioxide-enriched gas prior to said separation unit.

16. Apparatus according to Claim 14 to Claim 15, wherein said second heat exchanger (HE1) is arranged to re-boil an intermediate liquid in or taken from an intermediate location from said first column system (C1, C2).

17. Apparatus according to any of Claims 14 to 16, wherein said second heat exchanger (HE1) is arranged to re-boil said "heavy" impurity-enriched bottoms liquid (180).

18. Apparatus according to any of Claims 14 to 17, wherein said working fluid is carbon dioxide-enriched overhead vapor, said heat pump cycle comprising:
a fourth heat exchanger (HE1) in fluid flow communication with said first column system (C1, C2) for warming carbon dioxide-enriched overhead vapor (110) by indirect heat exchange to produce warmed carbon dioxide-enriched gas (210);
a first compressor (CP1) in fluid flow communication with said fourth heat exchanger (HE1) for compressing said warmed carbon dioxide-enriched gas (112) to produce said compressed carbon dioxide-enriched gas (120);
wherein said second heat exchanger (HE1) is arranged to vaporize said "heavy" impurity-enriched liquid (180) by indirect heat exchange against said compressed carbon dioxide-enriched gas (120).

19. Apparatus according to Claim 18, said apparatus comprising:
a thirteenth heat exchanger (HE1) in fluid flow communication with said separation unit (C3) for cooling and partially condensing "light" impurity-enriched gas (by indirect heat exchange to produce partially condensed "light" impurity-enriched gas (210); and
a first phase separator (S2) in fluid flow communication with said thirteenth heat exchanger (HE1) for separating partially condensed "light" impurity-enriched gas (210) to produce "light" impurity-rich residual gas (140) and recovered carbon dioxide liquid (212).

20. Apparatus according to any of Claims 14 to 17, wherein said working fluid is an intermediate liquid taken from said first column system, said heat pump cycle comprising:
a seventh pressure reduction arrangement (V11) in fluid flow communication with said first column system (C1) for expanding said intermediate liquid (170) to produce expanded intermediate liquid (174);
a nineteenth heat exchanger (HE1) in fluid flow communication with said seventh pressure reduction arrangement (V11) for vaporizing said expanded intermediate liquid by indirect heat exchange against said carbon dioxide-enriched overhead vapor (110) to produce intermediate gas (176) and said carbon dioxide-enriched liquid (124) for use as said reflux to said first column system (C1);
a seventh compressor (CP1) in fluid flow communication with said nineteenth heat exchanger (HE1) for compressing intermediate gas (176) to produce compressed intermediate gas (178);
a twentieth heat exchanger (HE1) in fluid flow communication with said seventh compressor (CP1) for cooling compressed intermediate gas (178) by indirect heat exchange to produce cooled intermediate gas (172); and
a conduit arrangement (172) for feeding cooled intermediate gas from said twentieth heat exchanger (HE1) to an intermediate location in said first column system (C1) to provide at least a portion of said vapor for said first column system (C1).

## Patentansprüche

1. Verfahren zum Reinigen von rohem Kohlendioxidfluid, umfassen mindestens eine "leichte" Verunreinigung und mindestens eine "schwere" Verunreinigung, wobei das Verfahren das Folgende umfasst:
Kühlen von dem rohen Kohlendioxidfluid über dem Tripelpunktdruck von Kohlendioxid durch indirekten Wärmetausch, um gekühltes, rohes Kohlendioxidfluid herzustellen;
Zuführen von dem gekühlten, rohen Kohlendioxidfluid zu einem ersten Kolonnensystem (C1, C2) zur Stoffübertragungstrennung, um einen kohlendioxidangereicherten Kopfproduktdampf, der die "leichte" Verunreinigung umfasst, und eine mit "schwerer" Verunreinigung angereicherte Bodenproduktflüssigkeit, die an der "leichten" Verunreinigung verarmt ist, herzustellen;
erneutes Aufkochen von dem ersten Kolonnensystem (C1, C2) durch zumindest teilweises Verdampfen von mindestens einer mit "schwerer" Verunreinigung angereicherten Flüssigkeit in oder entnommen aus dem ersten Kolonnensystem, durch indirekten Wärmetausch, um für das erste Kolonnensystem Dampf bereitzustellen;
Kühlen und zumindest teilweise Kondensieren von kohlendioxidangereichertem Kopfproduktdampf oder einem komprimierten, kohlendioxidangereicherten Gas, das daraus hergestellt wird, durch indirekten Wärmetausch, um zumindest teilweise kondensiertes, kohlendioxidangereichertes Gas herzustellen, das die "leichte" Verunreinigung umfasst;
Trennen von dem zumindest teilweise kondensierten, kohlendioxidangereicherten Gas durch Stoffübertragungstrennung in einem zweiten Destillationskolonnensystem (C3), um mit "leichter" Verunreinigung angereichertes Gas und kohlendioxidangereicherte Flüssigkeit herzustellen; und
Bereitstellen von zumindest einem Teil der kohlendioxidangereicherten Flüssigkeit als Reflux für das erste Kolonnensystem (C1, C2),
wobei das erste Kolonnensystem (C1, C2) über dem Tripelpunktdruck und unter dem kritischen Druck von Kohlendioxid arbeitet; und
wobei das Verfahren mindestens einen Wärmepumpenzyklus (110, 111, 112, CP1, 120, 200, V1, 202, C3, S1, 204, 122, 123, V4, 124, 53) umfasst, wobei als ein Arbeitsfluid ein Fluid aus dem ersten Kolonnensystem verwendet wird.

2. Verfahren nach Anspruch 1, wobei das zumindest teilweise kondensierte, kohlendioxidangereicherte Gas vor der Trennung expandiert wird, um das mit "leichter" Verunreinigung angereicherte Gas und die kohlendioxidangereicherte Flüssigkeit herzustellen.

3. Verfahren nach Anspruch 1 oder Anspruch 2, wobei der kohlendioxidangereicherte Kopfproduktdampf oder das komprimierte, kohlendioxidangereicherte Gas, das daraus hergestellt wird, durch den indirekten Wärmetausch teilweise kondensiert wird, um teilweise kondensiertes, kohlendioxidangereichertes Gas herzustellen.

4. Verfahren nach einem der Ansprüche 1 bis 3, wobei die mit "schwerer" Verunreinigung angereicherte Flüssigkeit(en), die für das erste Kolonnensystem (C1, C2) Dampf bereitstellt, eine Zwischenflüssigkeit in oder entnommen aus einem Zwischenort in dem ersten Kolonnensystem (C1, C2) umfasst.

5. Verfahren nach einem der vorhergehenden Ansprüche, wobei die mit "schwerer" Verunreinigung angereicherte Flüssigkeit(en), die für das erste Kolonnensystem (C1, C2) Dampf bereitstellt, die mit "schwerer" Verunreinigung angereicherte Bodenproduktflüssigkeit umfasst.

6. Verfahren nach einem der vorhergehenden Ansprüche, wobei das Kohlendioxid aus dem mit "leichter" Verunreinigung angereicherten Gas gewonnen wird, wodurch ein an "leichter" Verunreinigung reiches Restgas hergestellt wird, das optional aus dem Verfahren abgeführt wird.

7. Verfahren nach einem der vorhergehenden Ansprüche, wobei das Arbeitsfluid kohlendioxidangereicherter Kopfproduktdampf ist, wobei der Wärmepumpenzyklus das Folgende umfasst:
Erwärmen von dem kohlendioxidangereicherten Kopfproduktdampf durch indirekten Wärmetausch, um erwärmtes, kohlendioxidangereichertes Gas herzustellen; und
Komprimieren von dem erwärmten, kohlendioxidangereicherten Gas, um das komprimierte, kohlendioxidangereicherte Gas herzustellen,
wobei das komprimierte, kohlendioxidangereicherte Gas verwendet wird, um zumindest einen Teil der Verdampfungsarbeit bereitzustellen, die erforderlich ist, um zumindest teilweise die mit "schwerer" Verunreinigung angereicherte Flüssigkeit(en) zu verdampfen, wodurch das kohlendioxidangereicherte Gas gekühlt und teilweise kondensiert wird, um teilweise kondensiertes, kohlendioxidangereichertes Gas herzustellen, das die "leichte" Verunreinigung umfasst.

8. Verfahren nach Anspruch 7, wobei das Kohlendioxid aus dem mit "leichter" Verunreinigung angereicherten Gas gewonnen wird, um an "leichter" verunreinigungsreiches Restgas und gewonnenes Kohlendioxid herzustellen.

9. Verfahren nach einem der Ansprüche 1 bis 6, wobei das Arbeitsfluid eine Zwischenflüssigkeit ist, die aus dem ersten Kolonnensystem entnommen wird, wobei der Wärmepumpenzyklus das Folgende umfasst:
Expandieren von der Zwischenflüssigkeit, um expandierte Zwischenflüssigkeit herzustellen;
Verdampfen von der expandierten Zwischenflüssigkeit durch indirekten Wärmetausch gegen den kohlendioxidangereicherten Kopfproduktdampf, um Zwischengas und die kohlendioxidangereicherte Flüssigkeit zur Verwendung als den Reflux zu dem ersten Kolonnensystem (C1, C2) herzustellen;
Komprimieren von dem Zwischengas, um komprimiertes Zwischengas herzustellen; und
Kühlen von dem komprimierten Zwischengas durch indirekten Wärmetausch, um gekühltes Zwischengas herzustellen,
wobei das gekühlte Zwischengas an einem Zwischenort in das erste Kolonnensystem zugeführt wird, um zumindest einen Teil von dem Dampf für das erste Kolonnensystem (C1, C2) bereitzustellen.

10. Verfahren nach einem der vorhergehenden Ansprüche, wobei mindestens eine "schwere" Verunreinigung Schwefelwasserstoff ist.

11. Verfahren nach Anspruch 10, wobei mindestens eine "leichte" Verunreinigung aus der Gruppe ausgewählt ist, bestehend aus Stickstoff; Argon; Helium; Methan; und Ethan.

12. Verfahren nach Anspruch 6, wobei das an "leichter" Verunreinigung reiche Restgas Methan, Stickstoff und Helium umfasst, wobei das Verfahren das Absondern von Stickstoff und Helium von dem Methan umfasst und das Gewinnen von Helium aus dem Absonderungsverfahren.

13. Verfahren nach einem der vorhergehenden Ansprüche, wobei der Betriebsdruck (Betriebsdrücke) des ersten Kolonnensystems (C1, C2) etwa 5,2 bar bis etwa 40 bar und vorzugsweise 15 bar bis etwa 25 bar beträgt.

14. Apparat zum Reinigen von rohem Kohlendioxidfluid, umfassend mindestens eine "leichte" Verunreinigung und mindestens eine "schwere" Verunreinigung, wobei der Apparat das Folgende umfasst:
einen ersten Wärmetauscher (HE1) zum Kühlen von dem rohen Kohlendioxidfluid (100) durch indirekten Wärmetausch, um gekühltes, rohes Kohlendioxidfluid (102) herzustellen;
ein erstes Kolonnensystem (C1, C2) in Fluidfusskommunikation mit dem ersten Wärmetauscher (HE1) zum Trennen von dem gekühlten, rohen Kohlendioxidfluid (102) durch Stoffübertragungstrennung, um einen kohlendioxidangereicherten Kopfproduktdampf (110), der die "leichte" Verunreinigung umfasst, und eine mit "schwerer" Verunreinigung angereicherte Bodenproduktflüssigkeit (180), die an der "leichten" Verunreinigung verarmt ist, herzustellen;
mindestens einen zweiten Wärmetauscher (HE1) zum erneuten Aufkochen durch indirekten Wärmetausch von einer mit "schwerer" Verunreinigung angereicherten Flüssigkeit (180) in oder entnommen aus dem ersten Kolonnensystem (C1, C2), um für das erste Kolonnensystem (C1, C2) Dampf bereitzustellen;
einen dritten Wärmetauscher (HE1) zum Kühlen und zumindest teilweisen Kondensieren von kohlendioxidangereichertem Kopfproduktdampf oder einem komprimierten, kohlendioxidangereicherten Gas, das daraus hergestellt ist (120), durch indirekten Wärmetausch, um zumindest teilweise kondensiertes, kohlendioxidangereichertes Gas (200) herzustellen, das die "leichte" Verunreinigung umfasst;
eine Trenneinheit (C3) in Fluidflusskommunikation mit dem dritten Wärmetauscher (HE1) zum Trennen von zumindest teilweise kondensiertem, kohlendioxidangereichertem Gas (200), um mit "leichter" Verunreinigung angereichertes Gas (156) und kohlendioxidangereicherte Flüssigkeit (204) herzustellen; und
eine Leitungsanordnung (122, 123, 124) zum Bereitstellen von kohlendioxidangereicherter Flüssigkeit als Reflux für das erste Kolonnensystem (C1, C2),
wobei der Apparat mindestens einen Wärmepumpenzyklus (110, 111, 112, CP1, 120, 200, V1, 202, C3, S1, 204, 122, 123, V4, 124, 53) umfasst, wobei als ein Arbeitsfluid ein Fluid aus dem ersten Kolonnensystem (C1, C2) verwendet wird; und
wobei die Trenneinheit ein zweites Destillationskolonnensystem (C3) zur Stoffübertragungstrennung ist.

15. Apparat nach Anspruch 14, umfassend eine erste Druckverringerungsanordnung (V1) zwischen dem dritten Wärmetauscher (HE1) und der Trenneinheit (C3) zum Expandieren von dem zumindest teilweise kondensierten, kohlendioxidangereicherten Gas vor der Trenneinheit.

16. Apparat nach Anspruch 14 bis Anspruch 15, wobei der zweite Wärmetauscher (HE1) angeordnet ist, um eine Zwischenflüssigkeit in oder entnommen aus einem Zwischenort aus dem ersten Kolonnensystem (C1, C2) erneut aufzukochen.

17. Apparat nach einem der Ansprüche 14 bis 16, wobei der zweite Wärmetauscher (HE1) angeordnet ist, um die mit "schwerer" Verunreinigung angereicherte Bodenproduktflüssigkeit (180) erneut aufzukochen.

18. Apparat nach einem der Ansprüche 14 bis 17, wobei das Arbeitsfluid kohlendioxidangereicherter Kopfproduktdampf ist, wobei der Wärmepumpenzyklus das Folgende umfasst:
einen vierten Wärmetauscher (HE1) in Fluidfusskommunikation mit dem ersten Kolonnensystem (C1, C2) zum Erwärmen von kohlendioxidangereichertem Kopfproduktdampfstrom (110) durch indirekten Wärmetausch, um erwärmtes, kohlendioxidangereichertes Gas (210) herzustellen;
einen ersten Kompressor (CP1) in Fluidfusskommunikation mit dem vierten Wärmetauscher (HE1) zum Komprimieren von dem erwärmten, kohlendioxidangereicherten Gas (112), um das komprimierte, kohlendioxidangereicherte Gas (120) herzustellen;
wobei der zweite Wärmetauscher (HE1) angeordnet ist, um die mit "schwerer" Verunreinigung angereicherte Flüssigkeit (180) durch indirekten Wärmetausch gegen das komprimierte, kohlendioxidangereicherte Gas (120) zu verdampfen.

19. Apparat nach Anspruch 18, wobei der Apparat das Folgende umfasst:
einen dreizehnten Wärmetauscher (HE1) in Fluidfusskommunikation mit der Trenneinheit (C3) zum Kühlen und teilweisen Kondensieren von mit "leichter" Verunreinigung angereichertem Gas durch indirekten Wärmetausch, um teilweise kondensiertes, mit "leichter" Verunreinigung angereichertes Gas (210) herzustellen; und
einen ersten Phasentrenner (S2) in Fluidfusskommunikation mit dem dreizehnten Wärmetauscher (HE1) zum Trennen von teilweise kondensiertem, mit "leichter" Verunreinigung angereichertem Gas (210), um an "leichter" Verunreinigung reiches Restgas (140) und gewonnene Kohlendioxidflüssigkeit (212) herzustellen.

20. Apparat nach einem der Ansprüche 14 bis 17, wobei das Arbeitsfluid eine Zwischenflüssigkeit ist, die aus dem ersten Kolonnensystem entnommen ist, wobei der Wärmepumpenzyklus das Folgende umfasst:
eine siebte Druckverringerungsanordnung (V11) in Fluidfusskommunikation mit dem ersten Kolonnensystem (C1) zum Expandieren von der Zwischenflüssigkeit (170), um expandierte Zwischenflüssigkeit (174) herzustellen;
einen neunzehnten Wärmetauscher (HE1) in Fluidflusskommunikation mit der siebten Druckverringerungsanordnung (V11) zum Verdampfen von der expandierten Zwischenflüssigkeit durch indirekten Wärmetausch gegen den kohlendioxidangereicherten Kopfproduktdampf (110), um Zwischengas (176) und die kohlendioxidangereicherte Flüssigkeit (124) zur Verwendung als den Reflux zu dem ersten Kolonnensystem (C1) herzustellen;
einen siebten Kompressor (CP1) in Fluidfusskommunikation mit dem neunzehnten Wärmetauscher (HE1) zum Komprimieren von Zwischengas (176), um komprimiertes Zwischengas (178) herzustellen;
einen zwanzigsten Wärmetauscher (HE1) in Fluidfusskommunikation mit dem siebten Kompressor (CP1) zum Kühlen von komprimiertem Zwischengas (178) durch indirekten Wärmetausch, um gekühltes Zwischengas (172) herzustellen; und
eine Leitungsanordnung (172) zum Zuführen von gekühltem Zwischengas aus dem zwanzigsten Wärmetauscher (HE1) zu einem Zwischenort in dem ersten Kolonnensystem (C1), um zumindest einen Teil von dem Dampf für das erste Kolonnensystem (C1) bereitzustellen.

## Revendications

1. Procédé de purification de fluide de dioxyde de carbone brut comprenant au moins une impureté « légère » et au moins une impureté « lourde », ledit procédé comprenant :
le refroidissement dudit fluide de dioxyde de carbone brut au-dessus de la pression du point triple du dioxyde de carbone par échange thermique indirect pour produire un fluide de dioxyde de carbone brut refroidi ;
l'alimentation en ledit fluide de dioxyde de carbone brut refroidi d'un premier système de colonne (C1, C2) pour séparation par transfert de masse pour produire une vapeur de tête enrichie en dioxyde de carbone, comprenant ladite impureté « légère », et un liquide de fond enrichi en impureté « lourde », appauvri en dite impureté « légère » ;
la réébullition dudit premier système de colonne (C1, C2) par vaporisation au moins partielle d'au moins un liquide enrichi en impureté « lourde » dans ou pris dudit premier système de colonne par échange thermique indirect pour fournir de la vapeur pour ledit premier système de colonne ;
le refroidissement et la condensation au moins partielle de vapeur de tête enrichie en dioxyde de carbone ou d'un gaz enrichi en dioxyde de carbone comprimé produit à partir de celle-ci, par échange thermique indirect pour produire un gaz enrichi en dioxyde de carbone, au moins partiellement condensé, comprenant ladite impureté « légère » ;
la séparation dudit gaz enrichi en dioxyde de carbone au moins partiellement condensé, par séparation par transfert de masse dans un deuxième système de colonne de distillation (C3) pour produire un gaz enrichi en impureté « légère », et un liquide enrichi en dioxyde de carbone ; et
la fourniture d'au moins une portion dudit liquide enrichi en dioxyde de carbone en tant que reflux pour ledit premier système de colonne (C1, C2),
dans lequel ledit premier système de colonne (C1, C2) fonctionne au-dessus de la pression du point triple et en dessous de la pression critique du dioxyde de carbone ; et
dans lequel ledit procédé comprend au moins un cycle de pompe à chaleur (110, 111, 112, CP1, 120, 200, V1, 202, C3, S1, 204, 122, 123, V4, 124, 53) utilisant en tant que fluide de travail un fluide dudit premier système de colonne.

2. Procédé selon la revendication 1, dans lequel ledit gaz enrichi en dioxyde de carbone au moins partiellement condensé est dilaté avant ladite séparation pour produire ledit gaz enrichi en impureté « légère » et ledit liquide enrichi en dioxyde de carbone.

3. Procédé selon la revendication 1 ou 2, dans lequel ladite vapeur de tête enrichie en dioxyde de carbone, ou ledit gaz enrichi en dioxyde de carbone comprimé produit à partir de celle-ci, est partiellement condensée par ledit échange thermique indirect pour produire un gaz enrichi en dioxyde de carbone partiellement condensé.

4. Procédé selon l'une quelconque des revendications 1 à 3, dans lequel le(s)dit(s) liquide(s) enrichi(s) en impureté « lourde » fournissant de la vapeur pour ledit premier système de colonne (C1, C2) comprend un liquide intermédiaire dans ou pris d'un endroit intermédiaire dans ledit premier système de colonne (C1, C2).

5. Procédé selon l'une quelconque des revendications précédentes, dans lequel le(s)dit(s) liquide(s) enrichi(s) en impureté « lourde » fournissant de la vapeur pour ledit premier système de colonne (C1, C2) comprend ledit liquide de fond enrichi en impureté « lourde ».

6. Procédé selon l'une quelconque des revendications précédentes, dans lequel le dioxyde de carbone est récupéré dudit gaz enrichi en impureté « légère » produisant un gaz résiduel riche en impureté « légère » qui est purgé en option du procédé.

7. Procédé selon l'une quelconque des revendications précédentes, dans lequel ledit fluide de travail est de la vapeur de tête enrichie en dioxyde de carbone, ledit cycle de pompe à chaleur comprenant :
le chauffage de ladite vapeur de tête enrichie en dioxyde de carbone par échange thermique indirect pour produire un gaz enrichi en dioxyde de carbone chauffé ; et
la compression dudit gaz enrichi en dioxyde de carbone chauffé pour produire ledit gaz enrichi en dioxyde de carbone comprimé,
dans lequel ledit gaz enrichi en dioxyde de carbone comprimé est utilisé pour fournir au moins une partie du service de vaporisation requis pour vaporiser au moins partiellement le(s)dit(s) liquide(s) enrichi(s) en impureté « lourde », refroidissant ce faisant et condensant partiellement ledit gaz enrichi en dioxyde de carbone pour produire un gaz enrichi en dioxyde de carbone partiellement condensé comprenant ladite impureté « légère ».

8. Procédé selon la revendication 7, dans lequel du dioxyde de carbone est récupéré dudit gaz enrichi en impureté « légère » pour produire du gaz résiduel riche en impureté « légère » et du dioxyde de carbone récupéré.

9. Procédé selon l'une quelconque des revendications 1 à 6, dans lequel ledit fluide de travail est un liquide intermédiaire pris dudit premier système de colonne, ledit cycle de pompe à chaleur comprenant :
la dilation dudit liquide intermédiaire pour produire un liquide intermédiaire dilaté ;
la vaporisation dudit liquide intermédiaire dilaté par échange thermique indirect avec ladite vapeur de tête enrichie en dioxyde de carbone pour produire un gaz intermédiaire et ledit liquide enrichi en dioxyde de carbone pour utilisation en tant que dit reflux audit premier système de colonne (C1, C2) ;
la compression dudit gaz intermédiaire pour produire un gaz intermédiaire comprimé ; et
le refroidissement dudit gaz intermédiaire comprimé par échange thermique indirect pour produire un gaz intermédiaire refroidi,
dans lequel ledit gaz intermédiaire refroidi est alimenté à un endroit intermédiaire dans ledit premier système de colonne pour fournir au moins une portion de ladite vapeur pour ledit premier système de colonne (C1, C2).

10. Procédé selon l'une quelconque des revendications précédentes, dans lequel au moins une impureté « lourde » est du sulfure d'hydrogène.

11. Procédé selon la revendication 10, dans lequel au moins une impureté « légère » est sélectionnée à partir du groupe constitué de l'azote ; l'argon ; l'hélium, le méthane ; et l'éthane.

12. Procédé selon la revendication 6, dans lequel ledit gaz résiduel riche en impureté « légère » comprend du méthane, de l'azote et de l'hélium, ledit procédé comprenant le rejet d'azote et d'hélium, du méthane, et la récupération d'hélium du procédé de rejet.

13. Procédé selon l'une quelconque des revendications précédentes, dans lequel la(les) pression(s) de service dudit premier système de colonne (C1, C2) est d'environ 5,2 bar à environ 40 bar, et de préférence de 15 bar à environ 25 bar.

14. Appareil de purification de fluide de dioxyde de carbone brut comprenant au moins une impureté « légère » et au moins une impureté « lourde », ledit appareil comprenant :
un premier échangeur de chaleur (HE1) pour le refroidissement dudit fluide de dioxyde de carbone brut (100) par échange thermique indirect pour produire un fluide de dioxyde de carbone brut refroidi (102) ;
un premier système de colonne (C1, C2) en communication fluidique avec ledit premier échangeur de chaleur (HE1) pour la séparation dudit fluide de dioxyde de carbone brut refroidi (102) par séparation par transfert de masse pour produire une vapeur de tête enrichie en dioxyde de carbone (110), comprenant ladite impureté « légère », et un liquide de fond enrichi en impureté « lourde » (180) appauvri en dite impureté « légère » ;
au moins un deuxième échangeur de chaleur (HE1) pour la réébullition par échange thermique indirect d'un liquide enrichi en impureté « lourde » (180) dans ou pris dudit premier système de colonne (C1, C2) pour fournir de la vapeur pour ledit premier système de colonne (C1, C2) ;
un troisième échangeur de chaleur (HE1) pour le refroidissement et la condensation au moins partielle de vapeur de tête enrichie en dioxyde de carbone, ou d'un gaz enrichi en dioxyde de carbone (120) comprimé produit à partir de celle-ci, par échange thermique indirect pour produire un gaz enrichi en dioxyde de carbone au moins partiellement condensé (200) comprenant ladite impureté « légère » ;
une unité de séparation (C3) en communication fluidique avec ledit troisième échangeur de chaleur (HE1) pour la séparation de gaz enrichi en dioxyde de carbone au moins partiellement condensé (200) pour produire un gaz enrichi en impureté « légère » (156) et un liquide enrichi en dioxyde de carbone (204) ; et un agencement de conduits (122, 123, 124) pour la fourniture de liquide enrichi en dioxyde de carbone en tant que reflux pour ledit premier système de colonne (C1, C2),
dans lequel ledit appareil comprend au moins un cycle de pompe à chaleur (110, 111, 112, CP1, 120, 200, V1, 202, C3, S1, 204, 122, 123, V4, 124, S3) utilisant en tant que fluide de travail un fluide dudit premier système de colonne (C1, C2) ; et
dans lequel ladite unité de séparation est un deuxième système de colonne de distillation (C3) pour séparation par transfert de masse.

15. Appareil selon la revendication 14, comprenant un premier agencement de réduction de pression (V1) entre ledit troisième échangeur de chaleur (HE1) et ladite unité de séparation (C3) pour la dilatation dudit gaz enrichi en dioxyde de carbone au moins partiellement condensé avant ladite unité de séparation.

16. Appareil selon la revendication 14 ou 15, dans lequel ledit deuxième échangeur de chaleur (HE1) est agencé pour rebouillir un liquide intermédiaire dans ou pris d'un endroit intermédiaire dudit premier système de colonne (C1, C2).

17. Appareil selon l'une quelconque des revendications 14 à 16, dans lequel ledit deuxième échangeur de chaleur (HE1) est agencé pour rebouillir ledit liquide de fond enrichi en impureté « lourde » (180).

18. Appareil selon l'une quelconque des revendications 14 à 17, dans lequel ledit fluide de travail est une vapeur de tête enrichie en dioxyde de carbone, ledit cycle de pompe à chaleur comprenant :
un quatrième échangeur de chaleur (HE 1) en communication fluidique avec ledit premier système de colonne (C1, C2) pour le chauffage de vapeur de tête enrichie en dioxyde de carbone (110) par échange thermique indirect pour produire un gaz enrichi en dioxyde de carbone chauffé (210) ;
un premier compresseur (CP1) en communication fluidique avec ledit quatrième échangeur de chaleur (HE1) pour la compression dudit gaz enrichi en dioxyde de carbone chauffé (112) pour produire ledit gaz enrichi en dioxyde de carbone comprimé (120) ;
dans lequel ledit deuxième échangeur de chaleur (HE1) est agencé pour vaporiser ledit liquide enrichi en impureté « lourde » (180) par échange thermique indirect avec ledit gaz enrichi en dioxyde de carbone comprimé (120).

19. Appareil selon la revendication 18, ledit appareil comprenant :
un treizième échangeur de chaleur (HE1) en communication fluidique avec ladite unité de séparation (C3) pour le refroidissement et la condensation partielle de gaz enrichi en impureté « légère » (par échange thermique indirect pour produire un gaz enrichi en impureté « légère » partiellement condensé (210) ; et
un premier séparateur de phase (S2) en communication fluidique avec ledit treizième échangeur de chaleur (HE1) pour la séparation de gaz enrichi en impureté « légère » partiellement condensé (210) pour produire du gaz résiduel riche en impureté « légère » (140) et du liquide de dioxyde de carbone récupéré (212).

20. Appareil selon l'une quelconque des revendications 14 à 17, dans lequel ledit fluide de travail est un liquide intermédiaire pris dudit premier système de colonne, ledit cycle de pompe à chaleur comprenant :
un septième agencement de réduction de pression (V11) en communication fluidique avec ledit premier système de colonne (C1) pour la dilatation dudit liquide intermédiaire (170) pour produire un liquide intermédiaire dilaté (174) ;
un dix-neuvième échangeur de chaleur (HE1) en communication fluidique avec ledit septième agencement de réduction de pression (V11) pour la vaporisation dudit liquide intermédiaire dilaté par échange thermique indirect avec ladite vapeur de tête enrichie en dioxyde de carbone (110) pour produire du gaz intermédiaire (176) et ledit liquide enrichi en dioxyde de carbone (124) pour utilisation en tant que dit reflux audit premier système de colonne (C1) ;
un septième compresseur (CP1) en communication fluidique avec ledit dix-neuvième échangeur de chaleur (HE1) pour la compression de gaz intermédiaire (176) pour produire du gaz intermédiaire comprimé (178) ;
un douzième échangeur de chaleur (HE1) en communication fluidique avec ledit septième compresseur (CP1) pour le refroidissement de gaz intermédiaire comprimé (178) par échange thermique indirect pour produire un gaz intermédiaire refroidi (172) ; et
un agencement de conduits (172) pour l'alimentation en gaz intermédiaire refroidi dudit douzième échangeur de chaleur (HE1) à un endroit intermédiaire dans ledit premier système de colonne (C1) pour fournir au moins une portion de ladite vapeur pour ledit premier système de colonne (C1).
